# EUROPEAN PATENT APPLICATION

(11) **EP 4 843 717 A1**
(43) Date of publication of application: **25.11.2026**
(21) Application number: 25897996.2
(22) Date of filing: 24.01.2025
(51) Int. Cl.: B25J 15/06, B23Q 7/04, B25J 15/00, B23K 26/00, B23K 26/38

(54) **HAND FOR TRANSFERRING WORKPIECE, WORKPIECE TRANSFER APPARATUS, AND LASER PROCESSING SYSTEM**

(30) Priority: 27.11.2024 JP 2024206628
(71) Applicant: Yamazaki Mazak Corporation, Niwa-gun, Aichi 480-0197 (JP)
(72) Inventor: SAWADA, Yosuke, Niwa-gun, Aichi 480-0197 (JP); TAMURA, Yoji, Niwa-gun, Aichi 480-0197 (JP); SAKAI, Yoshihiko, Niwa-gun, Aichi 480-0197 (JP); KAWAGUCHI, Koji, Niwa-gun, Aichi 480-0197 (JP)
(74) Representative: TBK
(86) International application number: PCT/JP2025/002127
(87) International publication number: WO 2026/115751

(57) **Abstract**

A workpiece transfer hand includes a plurality of attachments and a plate. The plurality of attachments include a first attachment and a second attachment. The first attachment is capable of attracting a workpiece. The second attachment is capable of attracting the workpiece. To the plate, the plurality of attachments are attached. The plurality of attachments are attachable to the plate in a first layout. Each of the plurality of attachments is independently detachable from the plate. The plurality of attachments are reattachable to the plate in a second layout different from the first layout.

## Description

### Technical Field

The present invention relates to a workpiece transfer hand, a workpiece transfer device, and a laser beam machining system.

### Background Art

Apparatuses for conveying workpieces have been known.

Example related techniques include a robot hand disclosed in Patent Literature 1. The robot hand described in Patent Literature 1 includes a hand part having an elongated hole formed, and a plurality of vacuum pads. The position of each of the vacuum pads can be changed along the elongated hole.

### Citation List

### Patent Literature

PTL1: CD-ROM of Japanese Utility Model Application No. 4-22737 (published as Japanese Unexamined Utility Model Application Publication No. 5-80689).

### Summary of Invention

### Technical Problem

An object of the present invention is to provide a workpiece transfer hand, a workpiece transfer device, and a laser beam machining system including a plurality of attachments whose layout is variable in accordance with the shape of a workpiece.

### Solution to Problem

Embodiments of the present invention relate to a workpiece transfer hand, a workpiece transfer device, and a laser beam machining system described below.

(1) A workpiece transfer hand includes a plurality of attachments and a plate. The plurality of attachments include a first attachment and a second attachment. The first attachment is capable of attracting a workpiece. The second attachment is capable of attracting the workpiece. To the plate, the plurality of attachments are attached. The plurality of attachments are attachable to the plate in a first layout. Each of the plurality of attachments is independently detachable from the plate. The plurality of attachments are reattachable to the plate in a second layout different from the first layout.
(2) A workpiece transfer device includes a workpiece transfer hand and a hand traveling device configured to move the workpiece transfer hand. The workpiece transfer hand includes a plurality of attachments and a plate. The plurality of attachments include a first attachment and a second attachment. The first attachment is capable of attracting a workpiece. The second attachment is capable of attracting the workpiece. To the plate, the plurality of attachments are attached. The plurality of attachments are attachable to the plate in a first layout. Each of the plurality of attachments is independently detachable from the plate. The plurality of attachments are reattachable to the plate in a second layout different from the first layout.
(3) A laser beam machining system includes a laser beam machining apparatus and a workpiece transfer device. The laser beam machining apparatus is configured to irradiate a raw material workpiece with a laser beam to form a plurality of workpieces including a first workpiece and a second workpiece from the raw material workpiece. The workpiece transfer device is configured to convey the plurality of workpieces. The workpiece transfer device includes a workpiece transfer hand and a hand traveling device configured to move the workpiece transfer hand. The workpiece transfer hand includes a plurality of attachments and a plate. The plurality of attachments include a first attachment and a second attachment. The first attachment is capable of attracting the first workpiece. The second attachment is capable of attracting the first workpiece. To the plate, the plurality of attachments are attached. The plurality of attachments are attachable to the plate in a first layout. Each of the plurality of attachments is independently detachable from the plate. The plurality of attachments are reattachable to the plate in a second layout different from the first layout.

### Effects of Invention

The present invention can provide a workpiece transfer hand, a workpiece transfer device, and a laser beam machining system including a plurality of attachments whose layout is variable in accordance with the shape of a workpiece.

### Brief Description of Drawings

[FIG. 1] FIG. 1 is a schematic perspective view illustrating a state where a workpiece is attracted by a plurality of attachments disposed in a first layout.
[FIG. 2] FIG. 2 is a schematic perspective view illustrating how the layout of the plurality of attachments is changed.
[FIG. 3] FIG. 3 is a schematic perspective view illustrating how the layout of the plurality of attachments is changed.
[FIG. 4] FIG. 4 is a schematic perspective view illustrating how the layout of the plurality of attachments is changed.
[FIG. 5] FIG. 5 is a schematic perspective view illustrating how the layout of the plurality of attachments is changed.
[FIG. 6] FIG. 6 is a schematic perspective view illustrating how the layout of the plurality of attachments is changed.
[FIG. 7] FIG. 7 is a schematic perspective view illustrating how the layout of the plurality of attachments is changed.
[FIG. 8] FIG. 8 is a schematic perspective view illustrating a state where a second workpiece is attracted by the plurality of attachments disposed in a second layout.
[FIG. 9] FIG. 9 is a schematic side view schematically illustrating a workpiece transfer hand according to embodiment 1.
[FIG. 10] FIG. 10 is a schematic side view schematically illustrating the workpiece transfer hand according to embodiment 1.
[FIG. 11] FIG. 11 is a schematic side view schematically illustrating the workpiece transfer hand according to a first modification of embodiment 1.
[FIG. 12] FIG. 12 is a schematic bottom view for illustrating an attachable region.
[FIG. 13] FIG. 13 is a schematic bottom view for illustrating the attachable region.
[FIG. 14] FIG. 14 is a schematic perspective view illustrating a state where a pipe workpiece is attracted by the plurality of attachments disposed in the second layout.
[FIG. 15] FIG. 15 is a schematic perspective view illustrating the workpiece transfer device according to embodiment 1.
[FIG. 16] FIG. 16 is a schematic perspective view illustrating the workpiece transfer device according to embodiment 1.
[FIG. 17] FIG. 17 is a schematic perspective view illustrating a workpiece transfer hand according to embodiment 2.
[FIG. 18] FIG. 18 is a schematic perspective view illustrating the workpiece transfer hand according to embodiment 2.
[FIG. 19] FIG. 19 is a schematic perspective view illustrating the workpiece transfer hand according to embodiment 2.
[FIG. 20] FIG. 20 is a schematic perspective view illustrating a state where the workpiece is attracted by the plurality of attachments disposed in the first layout.
[FIG. 21] FIG. 21 is a schematic perspective view illustrating the workpiece transfer hand according to embodiment 2.
[FIG. 22] FIG. 22 is a schematic perspective view illustrating the workpiece transfer hand according to embodiment 2.
[FIG. 23] FIG. 23 is a schematic perspective view illustrating a workpiece transfer device according to embodiment 2.
[FIG. 24] FIG. 24 is a schematic perspective view illustrating a part of the workpiece transfer hand according to embodiment 2.
[FIG. 25] FIG. 25 is a schematic side view schematically illustrating the workpiece transfer hand according to embodiment 2.
[FIG. 26] FIG. 26 is a schematic side view schematically illustrating a first puller.
[FIG. 27] FIG. 27 is a schematic side view schematically illustrating a second puller.
[FIG. 28] FIG. 28 is a schematic bottom view schematically illustrating a part of the workpiece transfer hand according to embodiment 2.
[FIG. 29] FIG. 29 is a schematic side view schematically illustrating a part of the workpiece transfer hand according to embodiment 2.
[FIG. 30] FIG. 30 is a schematic side view schematically illustrating a state where a small workpiece is attracted to a movable attraction portion.
[FIG. 31] FIG. 31 is a schematic side view schematically illustrating a modification of the arrangement of the movable attraction portion.
[FIG. 32] FIG. 32 is a schematic perspective view illustrating the workpiece transfer device according to embodiment 2.
[FIG. 33] FIG. 33 is a schematic plan view schematically illustrating an example of an attachment supporter.
[FIG. 34] FIG. 34 is a cross-sectional view taken along a line indicated by arrows A-A in FIG. 33.
[FIG. 35] FIG. 35 is a schematic cross-sectional view illustrating a state where a gripping component has moved to a raised position.
[FIG. 36] FIG. 36 is a schematic bottom view schematically illustrating the workpiece transfer hand according to embodiment 2.
[FIG. 37] FIG. 37 is a schematic perspective view illustrating an example of the workpiece.
[FIG. 38] FIG. 38 is a diagram schematically illustrating how a controller can control a plurality of control target devices.
[FIG. 39] FIG. 39 is a schematic perspective view illustrating how a first position change mode is executed.
[FIG. 40] FIG. 40 is a schematic perspective view illustrating how a second position change mode is executed.
[FIG. 41] FIG. 41 is a schematic plan view schematically illustrating how a plurality of workpieces are sorted into a plurality of groups.
[FIG. 42] FIG. 42 is a schematic plan view schematically illustrating how a sorting mode is executed.
[FIG. 43] FIG. 43 is a schematic plan view schematically illustrating how the sorting mode is executed.
[FIG. 44] FIG. 44 is a schematic plan view schematically illustrating how the sorting mode is executed.
[FIG. 45] FIG. 45 is a schematic plan view schematically illustrating how the sorting mode is executed.
[FIG. 46] FIG. 46 is a schematic plan view schematically illustrating how the sorting mode is executed.
[FIG. 47] FIG. 47 is a schematic side view schematically illustrating a laser beam machining system according to embodiment 3.
[FIG. 48] FIG. 48 is a schematic perspective view illustrating a part of the laser beam machining system according to embodiment 3.

### Description of embodiments

A workpiece transfer hand 1, a workpiece transfer device 10, and a laser beam machining system 100 according to embodiments will now be described with reference to the accompanying drawings. In the description of the embodiments, portions and components having the same functions are denoted by the same reference numerals, and the redundant description on the portions and the components denoted by the same reference numerals will be omitted.

### (Definition of Terms)

In this specification, of a plurality of surfaces of a plate 3, the surface to which a plurality of attachments 2 are attached is defined as an attachment mounting surface 31a. Of the plurality of surfaces of the plate 3, the surface located on the opposite side of the attachment mounting surface 31a is defined as a back surface 33.

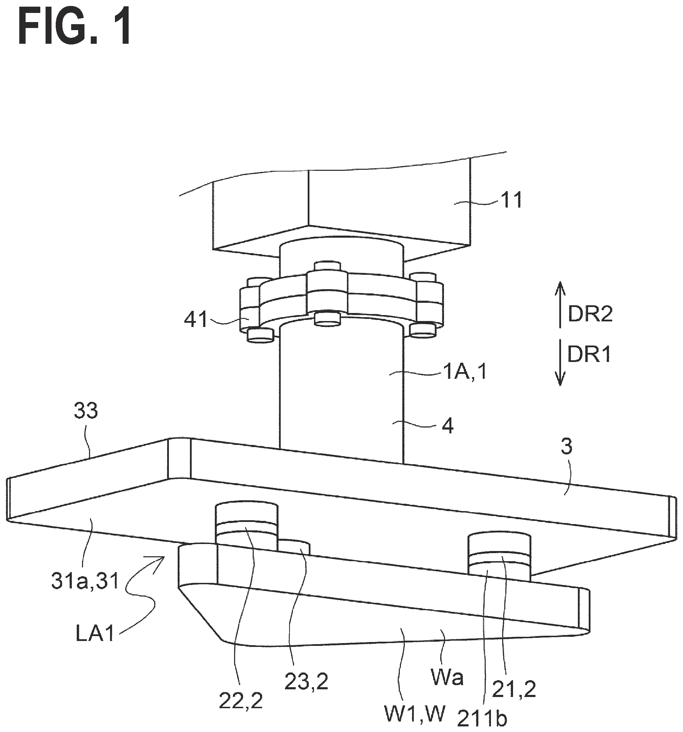

In this specification, a direction from a plate supporter 4 that supports the plate 3 toward the plate 3 is defined as a first direction DR1. A direction opposite to the first direction DR1 is defined as a second direction DR2. In the example illustrated in FIG. 1, a direction from the back surface 33 toward the attachment mounting surface 31a is the first direction DR1. The direction from the attachment mounting surface 31a toward the back surface 33 is the second direction DR2.

### (Embodiment 1)

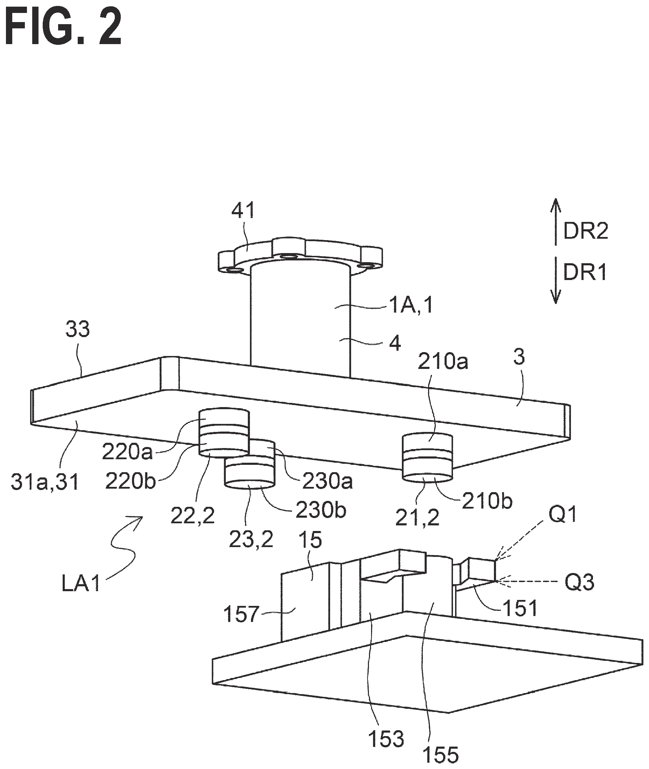

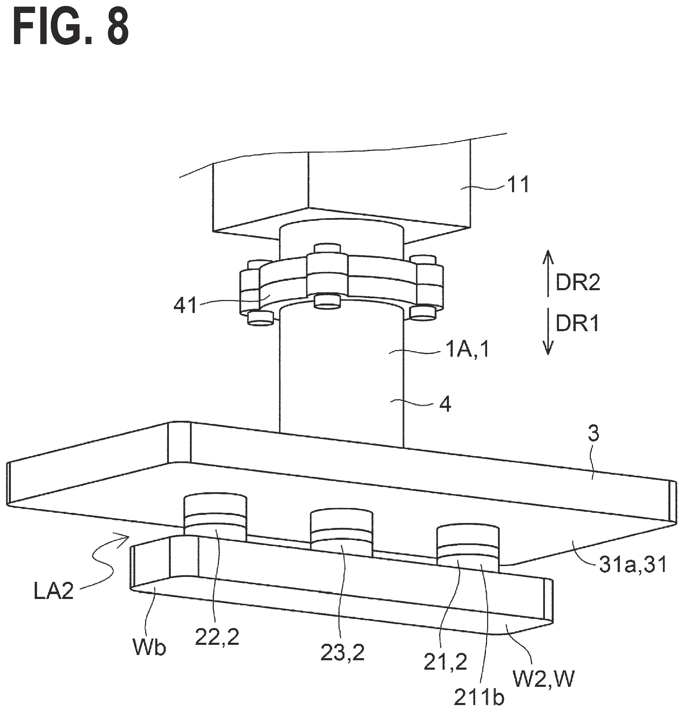

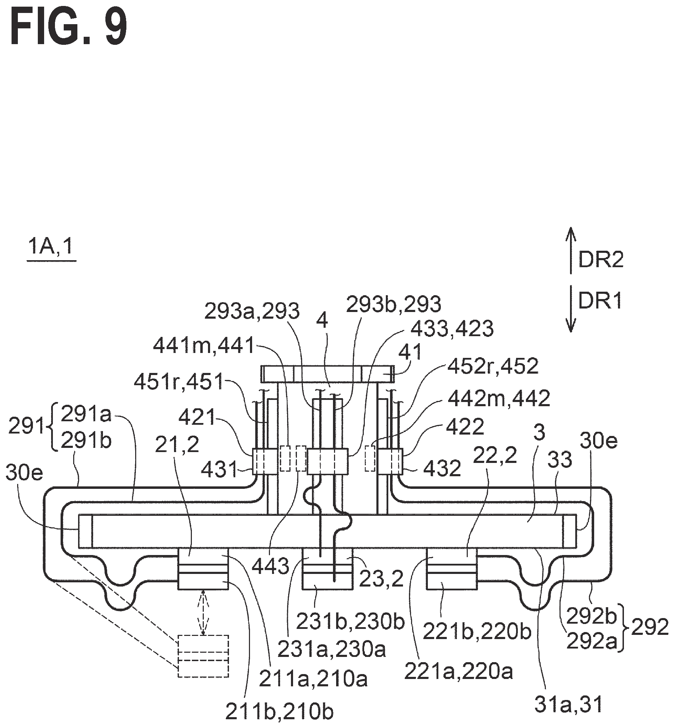

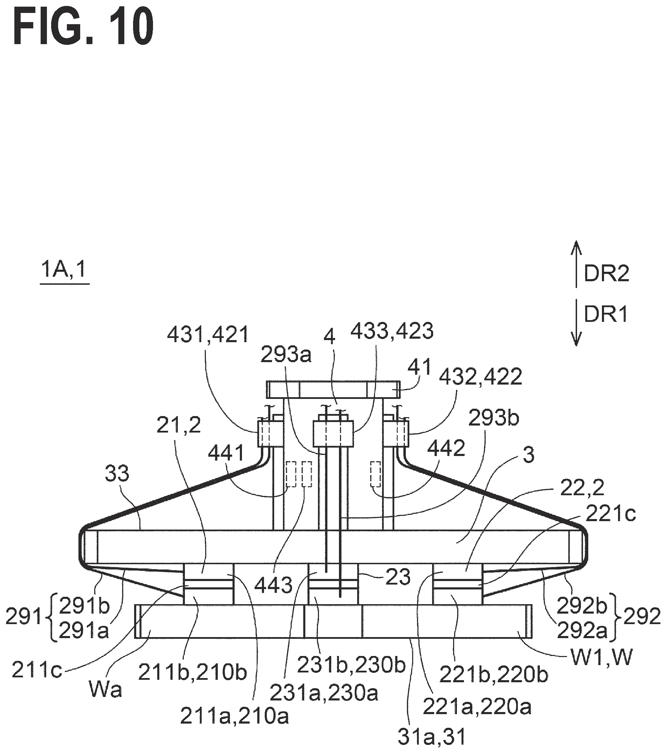

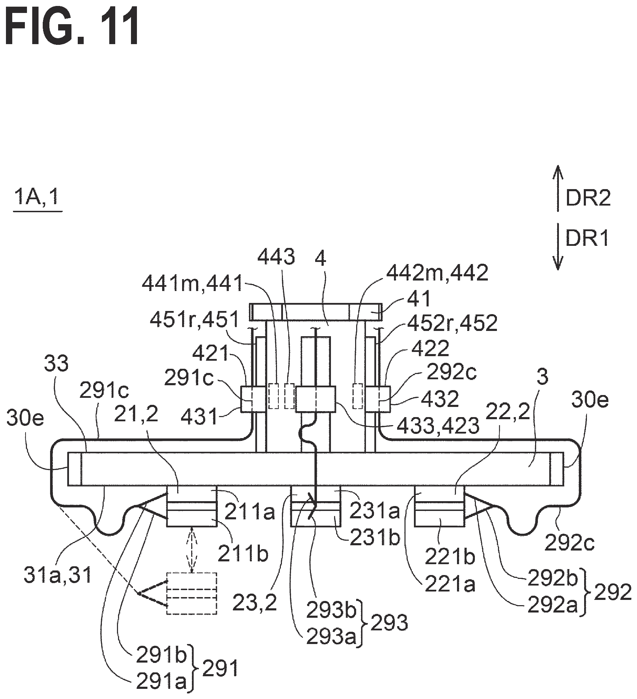

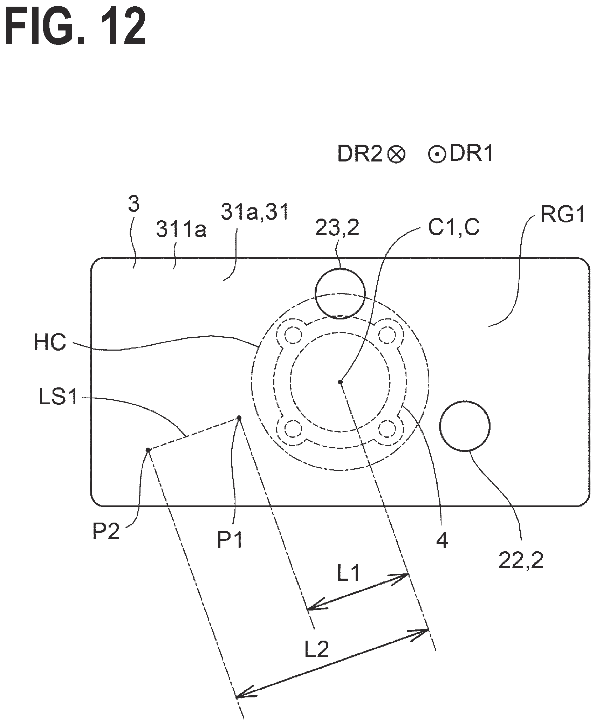

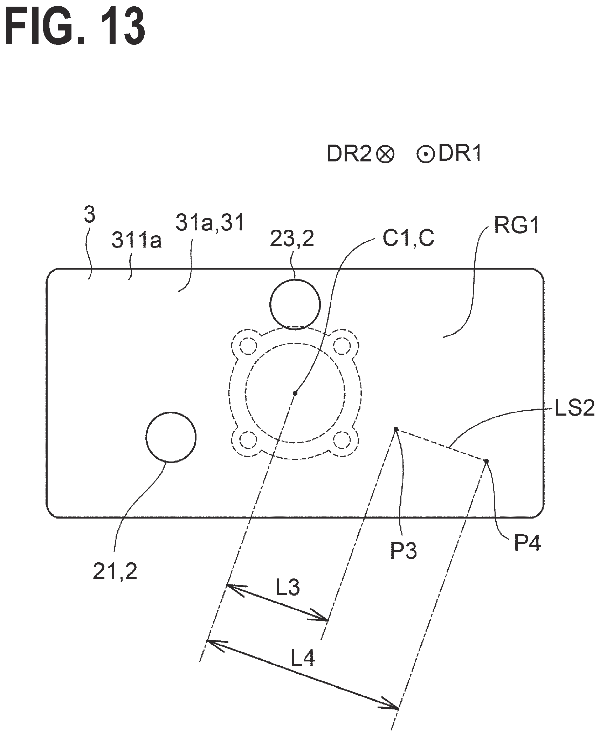

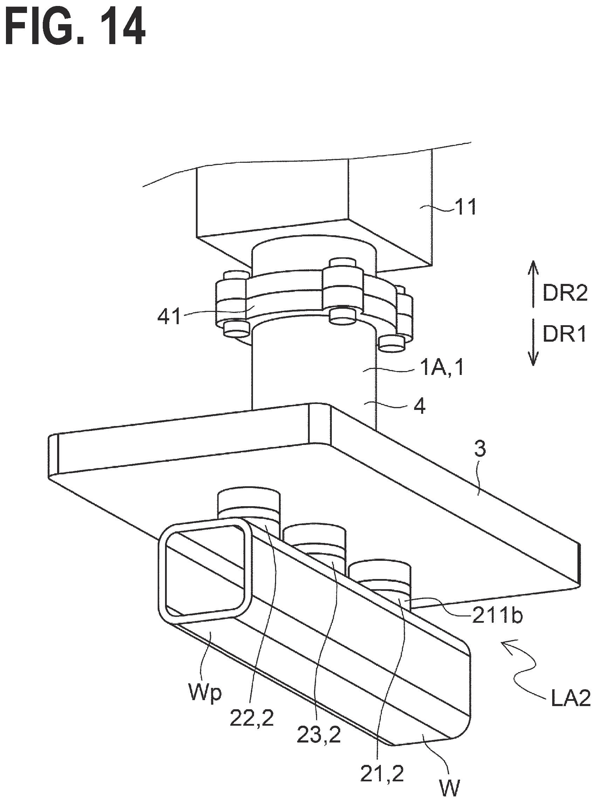

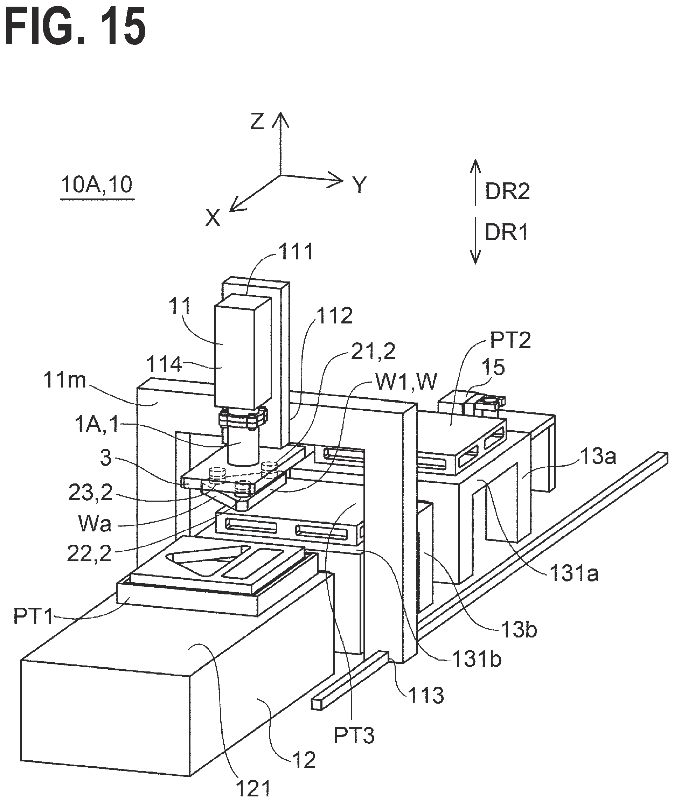

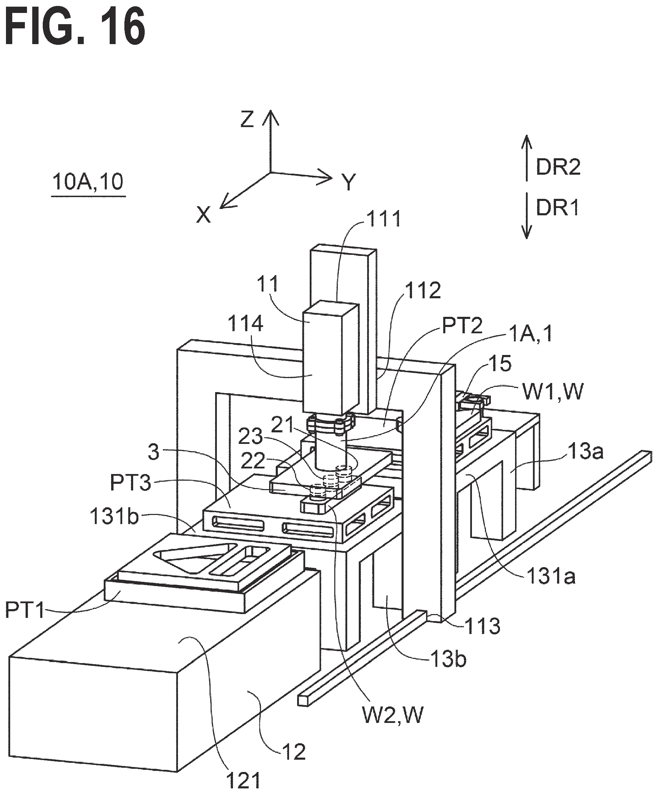

With reference to FIGs. 1 to 16, a workpiece transfer hand 1A and a workpiece transfer device 10A according to embodiment 1 will be described. FIG. 1 is a schematic perspective view illustrating a state where a workpiece W is attracted by a plurality of attachments 2 disposed in a first layout LA1. FIGs. 2 to 7 are schematic perspective views schematically illustrating how the layout of the plurality of attachments 2 is changed. FIG. 8 is a schematic perspective view illustrating a state where a second workpiece W2 is attracted by the plurality of attachments 2 disposed in a second layout LA2. FIGs. 9 and 10 are schematic side views schematically illustrating a workpiece transfer hand 1A according to embodiment 1. FIG. 11 is a schematic side view schematically illustrating the workpiece transfer hand 1A according to a first modification of embodiment 1. FIGs. 12 and 13 are schematic bottom views for illustrating an attachable region RG1. FIG. 14 is a schematic perspective view illustrating a state where a pipe workpiece Wp is attracted by the plurality of attachments 2 disposed in the second layout LA2. FIGs. 15 and 16 are schematic perspective views schematically illustrating the workpiece transfer device 10A according to embodiment 1.

As in the example illustrated in FIG. 1, the workpiece transfer hand 1A according to embodiment 1 includes the plurality of attachments 2 and the plate 3.

As in the example illustrated in FIG. 1, the plurality of attachments 2 include a first attachment 21 capable of attracting a workpiece W (for example, a first workpiece W1) and a second attachment 22 capable of attracting the workpiece W (for example, the first workpiece W1). The plurality of attachments 2 may include a third attachment 23 capable of attracting the workpiece W (for example, the first workpiece W1).

The plurality of attachments 2 are attached to the plate 3.

As in the example illustrated in FIG. 2, the plurality of attachments 2 are attachable to the plate 3 in the first layout LA1.

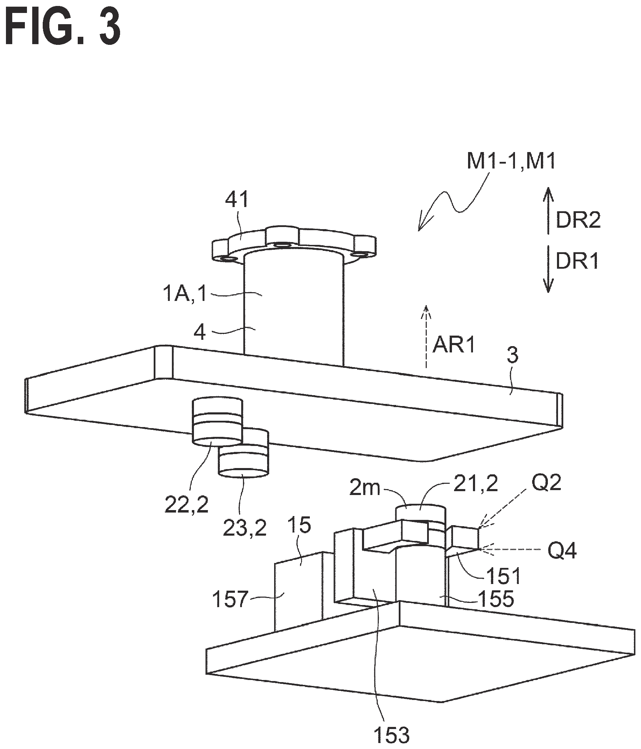

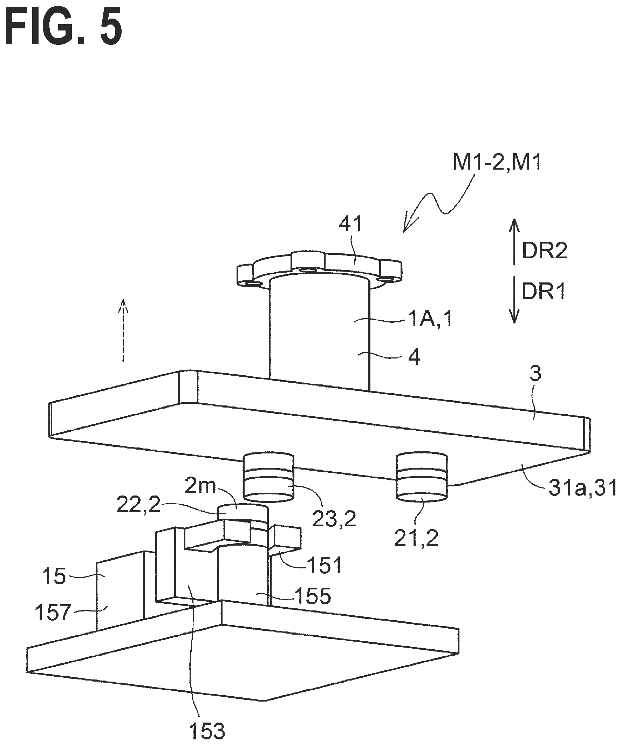

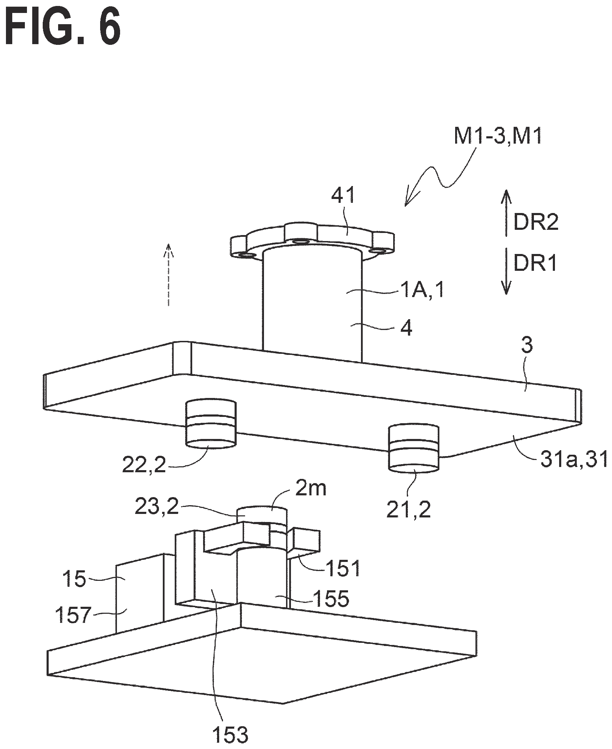

As in the examples illustrated in FIGs. 3 to 6, each of the plurality of attachments 2 is independently detachable from the plate 3. FIG. 3 illustrates a state where the first attachment 21 is detached from the plate 3. FIG. 5 illustrates a state where the second attachment 22 is detached from the plate 3. FIG. 6 illustrates a state where the third attachment 23 is detached from the plate 3.

Note that each of the plurality of attachments 2 being independently detachable from the plate 3 does not mean that the plurality of attachments 2 are necessarily detached from the plate 3 independently. For example, after all the work performed using the workpiece transfer hand 1A is completed, the plurality of attachments 2 may be detached from the plate 3 at once.

In the example illustrated in FIG. 3, the first attachment 21 is detachable from the plate 3 with the second attachment 22 attached to the plate 3. The first attachment 21 is detachable from the plate 3 with the second attachment 22 and the third attachment 23 attached to the plate 3.

In the example illustrated in FIG. 5, the second attachment 22 is detachable from the plate 3 with the first attachment 21 attached to the plate 3. The second attachment 22 is detachable from the plate 3 with the first attachment 21 and the third attachment 23 attached to the plate 3.

In the example illustrated in FIG. 6, the third attachment 23 is detachable from the plate 3 with the first attachment 21 attached to the plate 3. The third attachment 23 is detachable from the plate 3 with the first attachment 21 and the second attachment 22 attached to the plate 3.

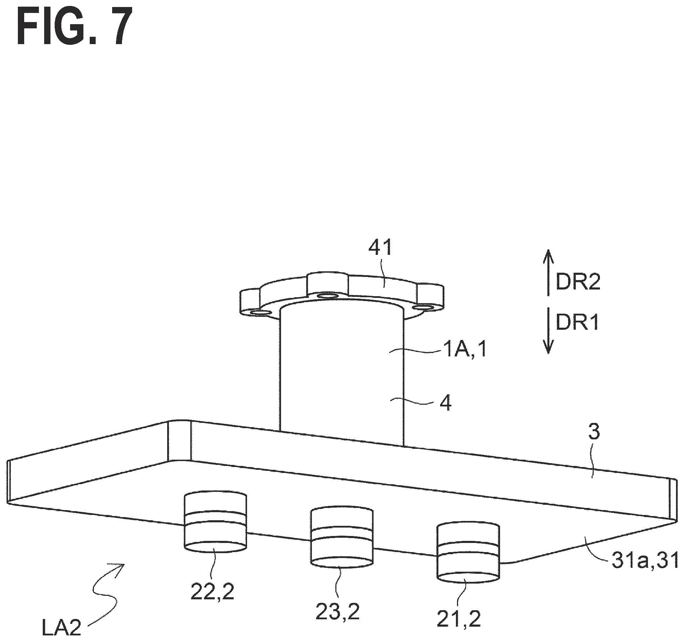

In the example illustrated in FIG. 7, the plurality of attachments 2 are reattachable to the plate 3 in the second layout LA2 different from the first layout LA1. As in the example illustrated in FIG. 8, the plurality of attachments 2 attached to the plate 3 in the second layout LA2 can attract another second workpiece W2 having a shape different from the workpiece W attracted by the plurality of attachments 2 attached to the plate 3 in the first layout LA1.

In the workpiece transfer hand 1A according to embodiment 1, the plurality of attachments 2 are attachable to the plate 3 in the first layout LA1, and the plurality of attachments 2 are reattachable to the plate 3 in the second layout LA2 different from the first layout LA1. In embodiment 1, the layout of the plurality of attachments can be changed in accordance with the shape of the workpiece W. Thus, there is no need to prepare multiple types of workpiece transfer hands to correspond to different workpiece shapes.

In the workpiece transfer hand 1A according to embodiment 1, each of the plurality of attachments 2 is independently detachable from the plate 3. For example, the first attachment 21 can be detached from the plate 3 with the second attachment 22 attached to the plate 3. Thus, a degree of freedom is high in terms of changing the layout of the plurality of attachments 2.

### (Optional Configurations)

Next, with reference to FIGs. 1 to 16, optional configurations that can be adopted in the workpiece transfer hand 1A according to embodiment 1 (or the workpiece transfer device 10A according to embodiment 1), or a workpiece transfer hand 1B according to embodiment 2 described below (or a workpiece transfer device 10B according to embodiment 2 described below) will be described.

### (Example of Procedure for Layout Change)

In the examples illustrated in FIGs. 2 to 7, the layout of the plurality of attachments 2 can be changed from the first layout LA1 (see FIG. 2) to the second layout LA2 (see FIG. 7), with at least one of the plurality of attachments 2 detached from the plate 3, and then reattached to the plate 3.

In the examples illustrated in FIGs. 2 to 7, the layout of the plurality of attachments 2 is changed from the first layout LA1 (see FIG. 2) to the second layout LA2 (see FIG. 7) with each of the first attachment 21, the second attachment 22, and the third attachment 23 detached from the plate 3, and then reattached to the plate 3.

In the examples illustrated in FIGs. 2 to 7, the plurality of attachments 2 are detached one by one, in order, from the plate 3. Each detached attachment 2 is then reattached to the plate 3 before the next attachment is detached from the plate 3. The order in which the plurality of attachments 2 are detached from the plate 3 is not particularly limited.

### (First Attachment 21)

In the example illustrated in FIG. 2, the first attachment 21 includes a first attraction portion 210a that attracts the plate 3. When the first attachment 21 includes the first attraction portion 210a that attracts the plate 3, the first attachment 21 can be easily attached to the plate 3.

The first attraction portion 210a is, for example, an attraction portion whose state is variable between an ON state to be capable of attracting the plate 3 and an OFF state to be incapable of attracting the plate 3. An example of the attraction portion whose state is variable between the ON state to be capable of attracting the plate 3 and the OFF state to be incapable of attracting the plate 3 includes an electromagnet, a vacuum suction unit connected to a negative pressure flow channel, and the like. When the first attraction portion 210a is the attraction portion whose state is variable between the ON state and the OFF state, the first attachment 21 can be easily attached to the plate 3, and the first attachment 21 can be easily detached from the plate 3.

In the example illustrated in FIG. 9, the first attraction portion 210a is a first electromagnet 211a. When current is supplied to the first electromagnet 211a, the first electromagnet 211a is excited. In the example illustrated in FIG. 9, the workpiece transfer hand 1A includes a first cable 291a for supplying current to the first electromagnet 211a. In the example illustrated in FIG. 9, the first cable 291a is routed around the outer side of an outer circumferential edge portion 30e of the plate 3.

In the example illustrated in FIG. 2, the first attachment 21 includes a second attraction portion 210b that attracts the workpiece W. When the first attachment 21 includes the second attraction portion 210b that attracts the workpiece W, the first attachment 21 can be easily attached to the workpiece W.

The second attraction portion 210b is, for example, an attraction portion whose state is variable between an ON state to be capable of attracting the workpiece W and an OFF state to be incapable of attracting the workpiece W. An example of the attraction portion whose state is variable between the ON state to be capable of attracting the workpiece W and the OFF state to be incapable of attracting the workpiece W includes an electromagnet, a vacuum suction unit connected to a negative pressure flow channel, and the like. When the second attraction portion 210b is the attraction portion whose state is variable between the ON state and the OFF state, the first attachment 21 can be easily attached to the workpiece W, and the first attachment 21 can be easily detached from the workpiece W.

In the example illustrated in FIG. 9, the second attraction portion 210b is a second electromagnet 211b. When current is supplied to the second electromagnet 211b, the second electromagnet 211b is excited. In the example illustrated in FIG. 9, the workpiece transfer hand 1A includes a second cable 291b for supplying current to the second electromagnet 211b. In the example illustrated in FIG. 9, the second cable 291b is routed around the outer side of the outer circumferential edge portion 30e of the plate 3.

### (Second Attachment 22)

In the example illustrated in FIG. 2, the second attachment 22 includes a third attraction portion 220a that attracts the plate 3. When the second attachment 22 includes the third attraction portion 220a that attracts the plate 3, the second attachment 22 can be easily attached to the plate 3.

The third attraction portion 220a is, for example, an attraction portion whose state is variable between an ON state to be capable of attracting the plate 3 and an OFF state to be incapable of attracting the plate 3. An example of the attraction portion whose state is variable between the ON state to be capable of attracting the plate 3 and the OFF state to be incapable of attracting the plate 3 includes an electromagnet, a vacuum suction unit connected to a negative pressure flow channel, and the like. When the third attraction portion 220a is the attraction portion whose state is variable between the ON state and the OFF state, the second attachment 22 can be easily attached to the plate 3, and the second attachment 22 can be easily detached from the plate 3.

In the example illustrated in FIG. 9, the third attraction portion 220a is a third electromagnet 221a. When current is supplied to the third electromagnet 221a, the third electromagnet 221a is excited. In the example illustrated in FIG. 9, the workpiece transfer hand 1A includes a third cable 292a for supplying current to the third electromagnet 221a. In the example illustrated in FIG. 9, the third cable 292a is routed around the outer side of the outer circumferential edge portion 30e of the plate 3.

In the example illustrated in FIG. 2, the second attachment 22 includes a fourth attraction portion 220b that attracts the workpiece W. When the second attachment 22 includes the fourth attraction portion 220b that attracts the workpiece W, the second attachment 22 can be easily attached to the workpiece W.

The fourth attraction portion 220b is, for example, an attraction portion whose state is variable between an ON state to be capable of attracting the workpiece W and an OFF state to be incapable of attracting the workpiece W. An example of the attraction portion whose state is variable between the ON state to be capable of attracting the workpiece W and the OFF state to be incapable of attracting the workpiece W includes an electromagnet, a vacuum suction unit connected to a negative pressure flow channel, and the like. When the fourth attraction portion 220b is the attraction portion whose state is variable between the ON state and the OFF state, the second attachment 22 can be easily attached to the workpiece W, and the second attachment 22 can be easily detached from the workpiece W.

In the example illustrated in FIG. 9, the fourth attraction portion 220b is a fourth electromagnet 221b. When current is supplied to the fourth electromagnet 221b, the fourth electromagnet 221b is excited. In the example illustrated in FIG. 9, the workpiece transfer hand 1A includes a fourth cable 292b for supplying current to the fourth electromagnet 221b. In the example illustrated in FIG. 9, the fourth cable 292b is arranged to circumvent the outer circumferential edge portion 30e of the plate 3.

### (Third Attachment 23)

In the example illustrated in FIG. 2, the third attachment 23 includes a fifth attraction portion 230a that attracts the plate 3. The third attachment 23 also includes a sixth attraction portion 230b that attracts the workpiece W.

In the example illustrated in FIG. 9, the fifth attraction portion 230a is a fifth electromagnet 231a. When current is supplied to the fifth electromagnet 231a, the fifth electromagnet 231a is excited. In the example illustrated in FIG. 9, the workpiece transfer hand 1A includes a fifth cable 293a for supplying current to the fifth electromagnet 231a. In the example illustrated in FIG. 9, the sixth attraction portion 230b is a sixth electromagnet 231b. When current is supplied to the sixth electromagnet 231b, the sixth electromagnet 231b is excited. In the example illustrated in FIG. 9, the workpiece transfer hand 1A includes a sixth cable 293b for supplying current to the sixth electromagnet 231b.

### (Plate Supporter 4)

In the example illustrated in FIG. 1, the workpiece transfer hand 1A includes the plate supporter 4 that supports the plate 3. In the example illustrated in FIG. 1, the plate supporter 4 has an attachment portion 41 that is attachable to a hand traveling device 11. When the hand traveling device 11 moves the workpiece transfer hand 1A, the workpiece W attracted by the plurality of attachments 2 is conveyed.

### (Cables 291)

In the examples illustrated in FIGs. 9 and 10, the workpiece transfer hand 1A includes the cables 291 for supplying current to the first attachment 21.

In the example illustrated in FIG. 9, the cables 291 include the first cable 291a for supplying current to the first electromagnet 211a and the second cable 291b for supplying current to the second electromagnet 211b. As in the example illustrated in FIG. 11, the first cable 291a and the second cable 291b may be bundled. In other words, the cables 291 may include a bundled region 291c where the first cable 291a and the second cable 291b are bundled. When the cables 291 include the bundled region 291c, cable cluttering around the plate 3 is alleviated.

### (First Puller 421)

In the example illustrated in FIG. 9, the workpiece transfer hand 1A includes a first puller 421 that pulls the cables 291. When the cables 291 are pulled, the slack of the cables 291 is reduced.

The first puller 421 includes a first support 431 that supports a part of the cables 291, and a first mover 441 that moves the first support 431 relative to the plate 3.

In the example illustrated in FIG. 9, the first support 431 supports a part of the cables 291. Alternatively, the first support 431 may be a movable pulley that supports a part of the cables 291.

In the example illustrated in FIG. 9, the cables 291 can be slackened using the first mover 441. In the example illustrated in FIG. 9, the first attachment 21 can be attached to the plate 3 with the cables 291 slackened. The first attachment 21 can be detached from the plate 3 with the cables 291 slackened. Thus, the first attachment 21 is smoothly attached and detached to and from the plate 3. In the example illustrated in FIG. 9, the cables 291 are slackened when the first mover 441 moves the first support 431 in the first direction DR1.

In the example illustrated in FIG. 10, the slack of the cables 291 can be reduced by using the first mover 441. More specifically, the cables 291 can be tensioned by using the first mover 441. In the example illustrated in FIG. 10, the first attachment 21 can attract the workpiece W with the slack of the cables 291 reduced (more specifically, with the cables 291 tensioned). Thus, when the workpiece W is attracted, the interference of the workpiece W with the cables 291 can be prevented or suppressed. In the example illustrated in FIG. 10, the slack of the cables 291 is reduced when the first mover 441 moves the first support 431 in the second direction DR2.

In the examples illustrated in FIGs. 9 and 11, the first support 431 supports or holds a part of the first cable 291a and a part of the second cable 291b. As in the example illustrated in FIG. 11, the first support 431 may support or hold a part of the bundled region 291c of the cables 291.

In the examples illustrated in FIGs. 9 and 11, the plate supporter 4 includes a first guide component 451 (more specifically, a first guide rail 451r) that guides the movement of the first support 431. In the examples illustrated in FIGs. 9 and 11, the first guide component 451 (more specifically, the first guide rail 451r) extends in a direction parallel to the first direction DR1.

The first mover 441 may include a motor 441m that moves the first support 431. Alternatively, the first mover 441 may include a fluid pressure cylinder that moves the first support 431. In this specification, the fluid pressure cylinder includes an air cylinder and a hydraulic cylinder.

In the examples illustrated in FIGs. 9 and 11, the first attachment 21 and the plate supporter 4 are connected via the cables 291. Thus, the cables 291 prevent the first attachment 21 having been detached from the plate 3 from being lost. The cables 291 may have the function of supplying current to the first attachment 21 and the function of preventing the first attachment 21 from being lost. The first cable 291a may have the function of supplying current to the first electromagnet 211a and the function of preventing the first attachment 21 from being lost. The second cable 291b may have the function of supplying current to the second electromagnet 211b and the function of preventing the first attachment 21 from being lost.

### (Cables 292)

In the examples illustrated in FIGs. 9 and 10, the workpiece transfer hand 1A includes the cables 292 for supplying current to the second attachment 22.

In the example illustrated in FIG. 9, the cables 292 include the third cable 292a for supplying current to the third electromagnet 221a and the fourth cable 292b for supplying current to the fourth electromagnet 221b. As in the example illustrated in FIG. 11, the third cable 292a and the fourth cable 292b may be bundled. In other words, the cables 292 may include a bundled region 292c where the third cable 292a and the fourth cable 292b are bundled. When the cables 292 include the bundled region 292c, cable cluttering around the plate 3 is alleviated

### (Second Puller 422)

In the example illustrated in FIG. 9, the workpiece transfer hand 1A includes a second puller 422 that pulls the cables 292. When the cables 292 are pulled, the slack of the cables 292 is reduced.

The second puller 422 includes a second support 432 that supports a part of the cables 292, and a second mover 442 that moves the second support 432 relative to the plate 3.

In the example illustrated in FIG. 9, the second support 432 supports a part of the cables 292. Alternatively, the second support 432 may be a movable pulley that supports a part of the cables 292.

In the example illustrated in FIG. 9, the cables 292 can be slackened using the second mover 442. In the example illustrated in FIG. 9, the second attachment 22 can be attached to the plate 3 with the cables 292 slackened. The second attachment 22 can be detached from the plate 3 with the cables 292 slackened. Thus, the second attachment 22 is smoothly attached and detached to and from the plate 3. In the example illustrated in FIG. 9, the cables 292 are slackened when the second mover 442 moves the second support 432 in the first direction DR1.

In the example illustrated in FIG. 10, the slack of the cables 292 can be reduced by using the second mover 442. More specifically, the cables 292 can be tensioned by using the second mover 442. In the example illustrated in FIG. 10, the second attachment 22 can attract the workpiece W with the slack of the cables 292 reduced (more specifically, with the cables 292 tensioned). Thus, when the workpiece W is attracted, the interference of the workpiece W with the cables 292 can be prevented or suppressed. In the example illustrated in FIG. 10, the slack of the cables 292 is reduced when the second mover 442 moves the second support 432 in the second direction DR2.

In the examples illustrated in FIGs. 9 and 11, the second support 432 supports or holds a part of the third cable 292a and a part of the fourth cable 292b. As in the example illustrated in FIG. 11, the second support 432 may support or hold a part of the bundled region 292c of the cables 292.

In the examples illustrated in FIGs. 9 and 11, the plate supporter 4 includes a second guide component 452 (more specifically, a second guide rail 452r) that guides the movement of the second support 432. In the examples illustrated in FIGs. 9 and 11, the second guide component 452 (more specifically, the second guide rail 452r) extends in a direction parallel to the first direction DR1.

The second mover 442 may include a motor 442m that moves the second support 432. Alternatively, the second mover 442 may include a fluid pressure cylinder that moves the second support 432.

In the examples illustrated in FIGs. 9 and 11, the second attachment 22 and the plate supporter 4 are connected via the cables 292. Thus, the cables 292 prevent the second attachment 22 having been detached from the plate 3 from being lost. The cables 292 may have the function of supplying current to the second attachment 22 and the function of preventing the second attachment 22 from being lost. The third cable 292a may have the function of supplying current to the third electromagnet 221a and the function of preventing the second attachment 22 from being lost. The fourth cable 292b may have the function of supplying current to the fourth electromagnet 221b and the function of preventing the second attachment 22 from being lost.

### (Cables 293 and Third Puller 423)

In the examples illustrated in FIGs. 9 and 10, the workpiece transfer hand 1A includes the cables 293 for supplying current to the third attachment 23, and a third puller 423 that pulls the cables 293.

In the example illustrated in FIG. 9, the cables 293 include the fifth cable 293a for supplying current to the fifth electromagnet 231a, and the sixth cable 293b for supplying current to the sixth electromagnet 231b. As in the example illustrated in FIG. 11, the fifth cable 293a and the sixth cable 293b may be bundled.

The third puller 423 includes a third support 433 that supports a part of the cables 293, and a third mover 443 that moves the third support 433 relative to the plate 3. In the examples illustrated in FIGs. 9 and 11, the third support 433 supports a part of the fifth cable 293a and a part of the sixth cable 293b.

### (Plate 3)

The plate 3 is, for example, a ferromagnetic material that attracts the first electromagnet 211a when energized. The plate 3 is mainly composed of, for example, iron.

The plate 3 has the attachment mounting surface 31a to which the plurality of attachments 2 are attached.

In this specification, a region where any of the plurality of attachments can be attached in the attachment mounting surface 31a is defined as the attachable region RG1. In the example illustrated in FIG. 12, the attachable region RG1 is continuously present 360 degrees around a central axis C of the attachment mounting surface 31a (more specifically, around a centroid C1 of the attachment mounting surface 31a). In other words, any of the plurality of attachments 2 can be attached at any angular position around the central axis C of the attachment mounting surface 31a. In this case, the attachment 2 can be arranged with a high degree of freedom, compared with a case where the attachable region RG1 is sporadically present around the central axis C of the attachment mounting surface 31a.

Substantially the entirety of the attachable region RG1 (or the entirety of the attachment mounting surface 31a) may be made of a ferromagnetic material. Alternatively, substantially the entirety of the attachable region RG1 (or the entirety of the attachment mounting surface 31a) may be made of a cover layer covering a ferromagnetic material.

The plate 3 has a first main surface 31. The first main surface 31 is the surface of the plate 3 directed in the first direction DR1. In the example illustrated in FIG. 12, the first main surface 31 includes the attachment mounting surface 31a.

Any one of the plurality of attachments 2 may be attachable to the first main surface 31 at any of the angular positions 360 degrees around the central axis C of the first main surface 31 (more specifically, at any of the angular positions 360 degrees around the centroid C1 of the first main surface 31). More specifically, any one of the plurality of attachments 2 may be attachable to the first main surface 31 at any position on one virtual circle HC around the central axis C of the first main surface 31. In this case, the attachment 2 can be arranged with a high degree of freedom relative to the first main surface 31.

In the example illustrated in FIG. 12, the plate 3 has a flat surface 311a to which the plurality of attachments 2 are attached. To this flat surface 311a, the plurality of attachments 2 are attachable in a non-engaging manner. When the attachment 2 (for example, the first attachment 21) is attached in a non-engaging manner, the attachment 2 (for example, the first attachment 21) can be arranged with a high degree of freedom, compared with a case where a protruding portion (or a recessed portion) of the attachment 2 (for example, the first attachment 21) engages with a recessed portion (or a protruding portion) of the attachment mounting surface 31a.

In the example illustrated in FIG. 12, the first attachment 21 is attachable at a first position P1 on the attachment mounting surface 31a. In the example illustrated in FIG. 12, the first attachment 21 is attachable at a second position P2 on the attachment mounting surface 31a. In the example illustrated in FIG. 12, the first position P1 about the central axis C of the attachment mounting surface 31a has an angular position equal to that of the second position P2 about the central axis C.

A distance between the first position P1 and the central axis C of the attachment mounting surface 31a is defined as a first distance L1, and a distance between the second position P2 and the central axis C of the attachment mounting surface 31a is defined as a second distance L2. In the example illustrated in FIG. 12, the second distance L2 is longer than the first distance L1. In the example illustrated in FIG. 12, the first attachment 21 is attachable at any position on a line segment LS1 connecting the first position P1 and the second position P2.

In the example illustrated in FIG. 13, the second attachment 22 is attachable to the attachment mounting surface 31a.

In the example illustrated in FIG. 13, the second attachment 22 is attachable at a third position P3 on the attachment mounting surface 31a. In the example illustrated in FIG. 13, the second attachment 22 is attachable at a fourth position P4 on the attachment mounting surface 31a. In the example illustrated in FIG. 13, the third position P3 about the central axis C of the attachment mounting surface 31a has an angular position equal to that of the fourth position P4 about the central axis C of the attachment mounting surface 31a.

A distance between the third position P3 and the central axis C of the attachment mounting surface 31a is defined as a third distance L3, and a distance between the fourth position P4 and the central axis C of the attachment mounting surface 31a is defined as a fourth distance L4. In the example illustrated in FIG. 13, the fourth distance L4 is longer than the third distance L3. In the example illustrated in FIG. 13, the second attachment 22 is attachable at any position on a line segment LS2 connecting the third position P3 and the fourth position P4.

### (Workpiece W)

In the example illustrated in FIG. 1, the workpiece W is a plate workpiece Wa. More specifically, the plurality of attachments 2 disposed in the first layout LA1 on the plate 3 can attract the plate workpiece Wa.

The workpiece W (more specifically, the plate workpiece Wa) is composed of, for example, a ferromagnetic material that is attracted by the second electromagnet 211b when energized. The workpiece W (more specifically, the plate workpiece Wa) is mainly composed of, for example, iron.

The plate workpiece Wa may be a thick plate. The thickness of the plate workpiece Wa is, for example, 1 cm or more, 2 cm or more, or 3 cm or more. Alternatively, the plate workpiece Wa may be a thin plate. The plate workpiece Wa may be a heavy workpiece. The mass of the plate workpiece Wa is, for example, 5 kg or more, or 10 kg or more. Alternatively, the plate workpiece Wa may be a lightweight workpiece.

### (Second Workpiece W2)

In the example illustrated in FIG. 8, the second workpiece W2 is a plate workpiece Wb. More specifically, the plurality of attachments 2 disposed in the second layout LA2 on the plate 3 can attract the second plate workpiece Wb.

The second workpiece W2 (more specifically, the second plate workpiece Wb) is composed of, for example, a ferromagnetic material that is attracted by the second electromagnet 211b when energized. The second workpiece W2 (more specifically, the second plate workpiece Wb) is mainly composed of, for example, iron.

The workpiece W or the second workpiece W2 may be a pipe workpiece. FIG. 14 illustrates how the pipe workpiece Wp is conveyed using the workpiece transfer hand 1A. In the example illustrated in FIG. 14, the plurality of attachments 2 disposed in the second layout LA2 on the plate 3 can attract the pipe workpiece Wp.

### (Workpiece transfer device 10A)

In the example illustrated in FIG. 15, the workpiece transfer device 10A includes the workpiece transfer hand 1A and the hand traveling device 11, which moves the workpiece transfer hand 1A. The workpiece transfer hand 1A has already been described, and the redundant description on the workpiece transfer hand 1A will be omitted. The workpiece transfer device 10A according to embodiment 1 provides effects equal to the workpiece transfer hand 1A according to embodiment 1.

### (Hand traveling device 11)

In the examples illustrated in FIGs. 15 and 16, the hand traveling device 11 can move the workpiece transfer hand 1A three dimensionally.

The hand traveling device 11 preferably has at least three degrees of freedom. In the examples illustrated in FIGs. 15 and 16, the hand traveling device 11 has one degree of freedom parallel to the vertical direction and two degrees of freedom parallel to the horizontal plane. The hand traveling device 11 may also have a rotational degree of freedom about an axis parallel to the vertical direction.

In this specification, the axis parallel to the vertical direction is defined as the Z axis, one axis parallel to the horizontal plane is defined as the X axis, and the axis orthogonal to both the Z axis and the X axis is defined as the Y axis. In the example illustrated in FIG. 15, the hand traveling device 11 includes a Z-axis mover 111 that moves the workpiece transfer hand 1A in a direction along the Z axis parallel to the vertical direction. The hand traveling device 11 may include a Y-axis mover 112 that moves the workpiece transfer hand 1A in a direction along the Y axis parallel to the horizontal plane. The hand traveling device 11 may include an X-axis mover 113 that moves the workpiece transfer hand 1A in a direction along the X axis, which is orthogonal to both the Z axis and the Y axis. Alternatively or additionally, the hand traveling device 11 may include a rotator 114 that rotates the workpiece transfer hand 1A about an axis parallel to the Z axis.

### (First Platform 12)

The workpiece transfer device 10A includes a first platform 12 capable of supporting a plurality of workpieces including the first workpiece W1 and the second workpiece W2. The first platform 12 may include a first pallet PT1 on which the plurality of workpieces including the first workpiece W1 and the second workpiece W2 can be placed, and a first support stand 121 that supports the plurality of workpieces via the first pallet PT1.

### (Second Platform 13a and Third Platform 13b)

The workpiece transfer device 10A may include a second platform 13a for receiving the first workpiece W1 conveyed by the workpiece transfer hand 1A. The second platform 13a may include a second pallet PT2 on which the first workpiece W1 can be placed, and a second support stand 131a that supports the first workpiece W1 via the second pallet PT2. In the example illustrated in FIG. 15 the workpiece transfer device 10A conveys the first workpiece W1 from the first platform 12 to the second platform 13a.

The workpiece transfer device 10A may include a third platform 13b for receiving the second workpiece W2 conveyed by the workpiece transfer hand 1A. The third platform 13b may include a third pallet PT3 on which the second workpiece W2 can be placed, and a third support stand 131b that supports the second workpiece W2 via the third pallet PT3. In the example illustrated in FIG. 16, the workpiece transfer device 10A conveys the second workpiece W2 from the first platform 12 to the third platform 13b.

At least one item (for example, the first workpiece W1) classified as a first group of the plurality of workpieces including the first workpiece W1 and the second workpiece W2 may be conveyed to the second platform 13a (more specifically, the second pallet PT2).

At least one item (for example, the second workpiece W2) classified as a second group of the plurality of workpieces including the first workpiece W1 and the second workpiece W2 may be conveyed to the third platform 13b (more specifically, the third pallet PT3).

Alternatively, the workpiece transfer device 10A may convey the first workpiece W1 to one side portion of the second platform 13a (for example, one side portion of the second pallet PT2) and convey the second workpiece W2 to the other side portion of the second platform 13a (for example, the other side portion of the second pallet PT2).

### (Attachment Supporter 15)

In the examples illustrated in FIGs. 15 and 16, the workpiece transfer device 10A includes an attachment supporter 15 that supports an attachment 2, out of the plurality of attachments 2, that has been detached from the plate 3.

In the examples illustrated in FIGs. 2 to 5, the attachment position of the first attachment 21 with respect to the plate 3 is changed by the movement of the workpiece transfer hand 1A relative to the first attachment 21 supported by the attachment supporter 15. In the examples illustrated in FIGs. 2 to 5, there is no need to manually change the attachment position of the first attachment 21. Thus, the operator's workload does not increase.

In the examples illustrated in FIGs. 2 to 5, the attachment position of the first attachment 21 with respect to the plate 3 is changed by the movement of the workpiece transfer hand 1A.

More specifically, as in the example illustrated in FIG. 3, changing the attachment position of the first attachment 21 with respect to the plate 3 includes moving the workpiece transfer hand 1A by the hand traveling device 11 (not illustrated in FIG. 3) in a direction (more specifically, the vertical direction) away from the first attachment 21 supported by the attachment supporter 15 (see a dashed-line arrow AR1 in FIG. 3). As the workpiece transfer hand 1A moves in a direction away from the first attachment 21 supported by the attachment supporter 15, the plate 3 moves away from the first attachment 21.

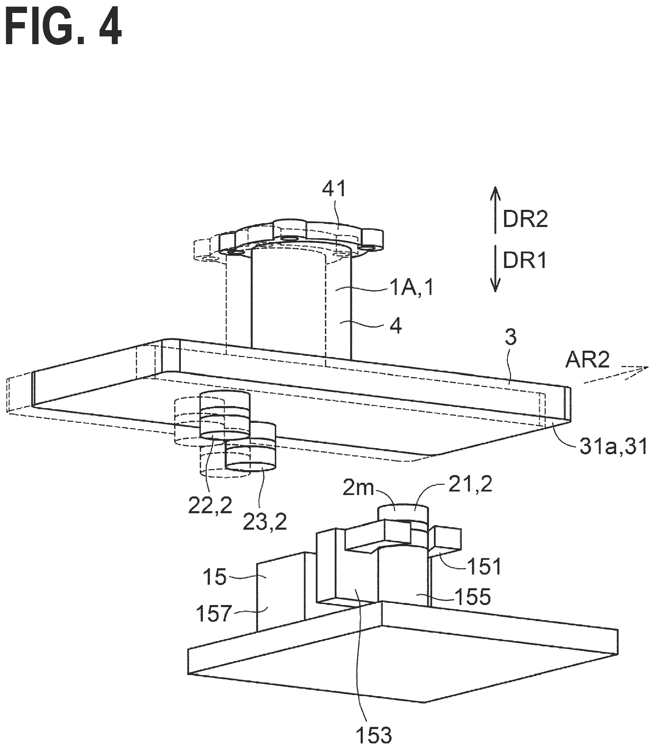

As in the example illustrated in FIG. 4, changing the attachment position of the first attachment 21 with respect to the plate 3 includes moving the workpiece transfer hand 1A by the hand traveling device 11 (not illustrated in FIG. 4) in a direction (more specifically, a direction parallel to the horizontal plane) intersecting the Z axis, which is parallel to the vertical direction (see a dashed-line arrow AR2 in FIG. 4).

Changing the attachment position of the first attachment 21 with respect to the plate 3 includes moving the workpiece transfer hand 1A by the hand traveling device 11 in a direction (more specifically, the vertical downward direction) toward the first attachment 21 supported by the attachment supporter 15. With the movement of the workpiece transfer hand 1A in the direction toward the first attachment 21 supported by the attachment supporter 15, the first attachment 21 is reattached to the plate 3. FIG. 5 illustrates the state after the first attachment 21 has been reattached to the plate 3.

In this specification, the attachment, out of the plurality of attachments 2, that has been detached from the plate 3 is defined as a detached attachment 2m.

As in the examples illustrated in FIGs. 2 and 3, the attachment supporter 15 includes a gripping component 151 that grips the detached attachment 2m (for example, the first attachment 21) and a gripping component mover 153 that moves the gripping component 151 between an open position Q1 (see FIG. 2) and a closed position Q2 (see FIG. 3).

The attachment supporter 15 may include a stand 155 on which the detached attachment 2m (for example, the first attachment 21) is placed.

Additionally, the attachment supporter 15 may include an lifting device 157 that moves the gripping component 151 between a lowered position Q3 (see FIG. 2) and a raised position Q4 (see FIG. 3). In the example illustrated in FIG. 2, when the gripping component 151 is positioned at the lowered position Q3, the first attachment 21 attached to the plate 3 does not interfere with the gripping component 151. In the example illustrated in FIG. 3, when the gripping component 151 is positioned at the raised position Q4, the gripping component 151 can grip the first attachment 21. In the examples illustrated in FIGs. 2 and 3, the lifting device 157 moves the gripping component 151 relative to the stand 155 in a direction parallel to the vertical direction.

In the example illustrated in FIG. 4, the attachment supporter 15 can support the first attachment 21 detached from the plate 3. In the example illustrated in FIG. 5, the attachment supporter 15 can support the second attachment 22 detached from the plate 3. As in the examples illustrated in FIGs. 4 and 5, the attachment supporter 15 may be capable of selectively supporting the first attachment 21 and the second attachment 22.

In the example illustrated in FIG. 6, the attachment supporter 15 can support the third attachment 23 detached from the plate 3. As in the example illustrated in FIG. 5 and 6, the attachment supporter 15 may be capable of selectively supporting the second attachment 22 and the third attachment 23.

### (Embodiment 2)

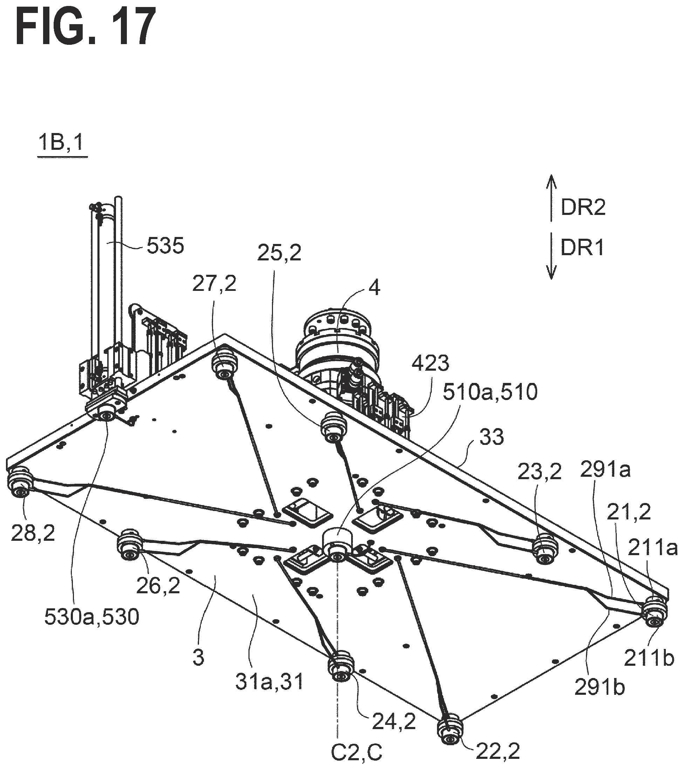

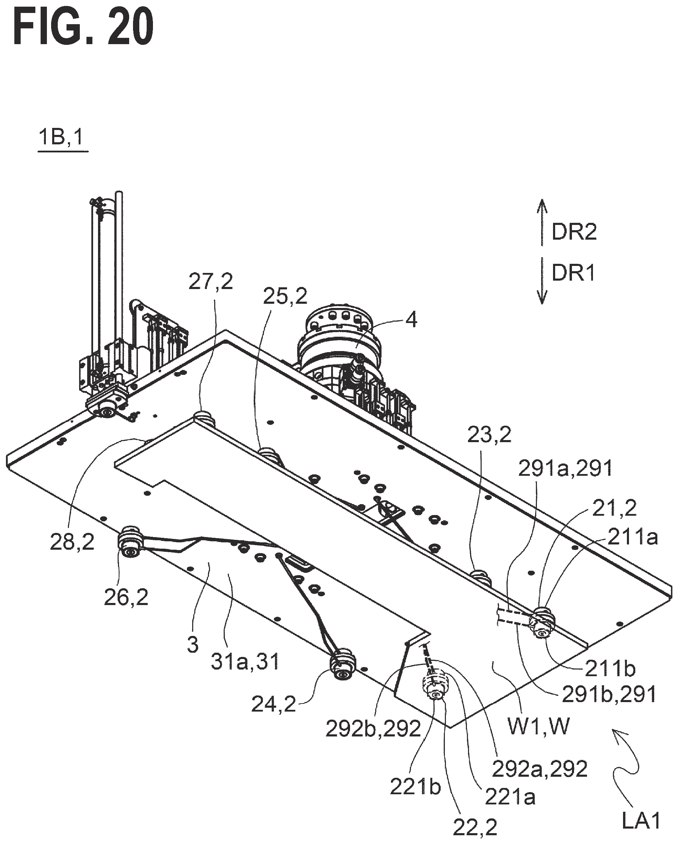

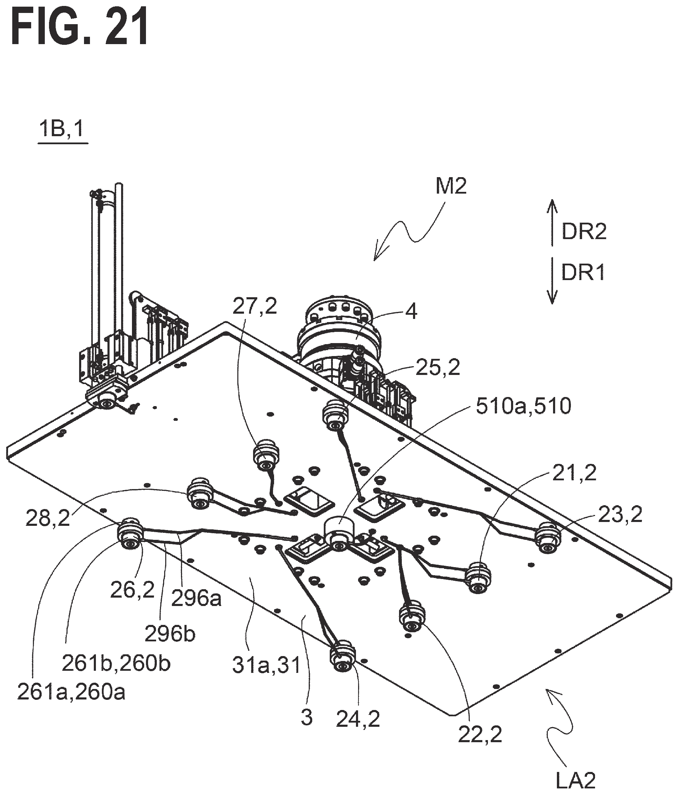

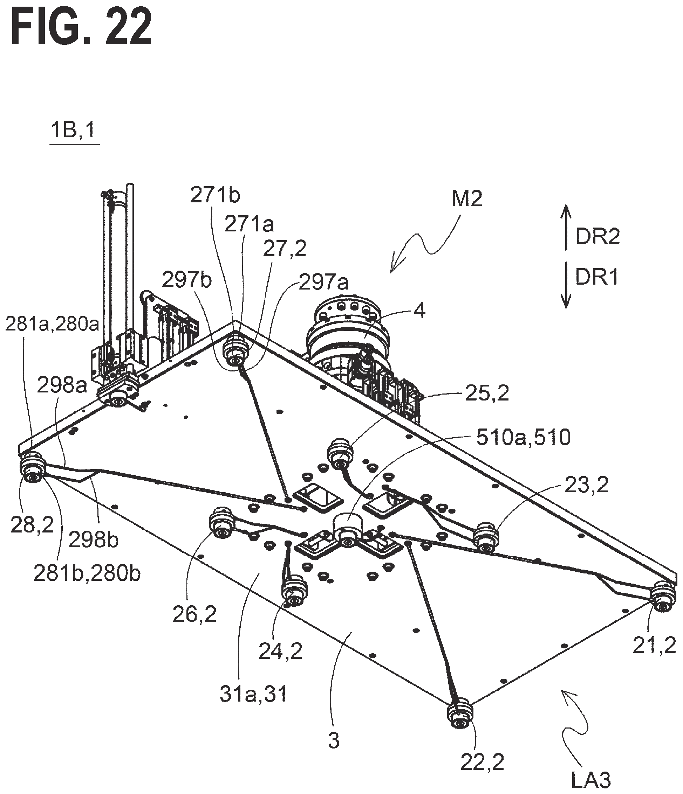

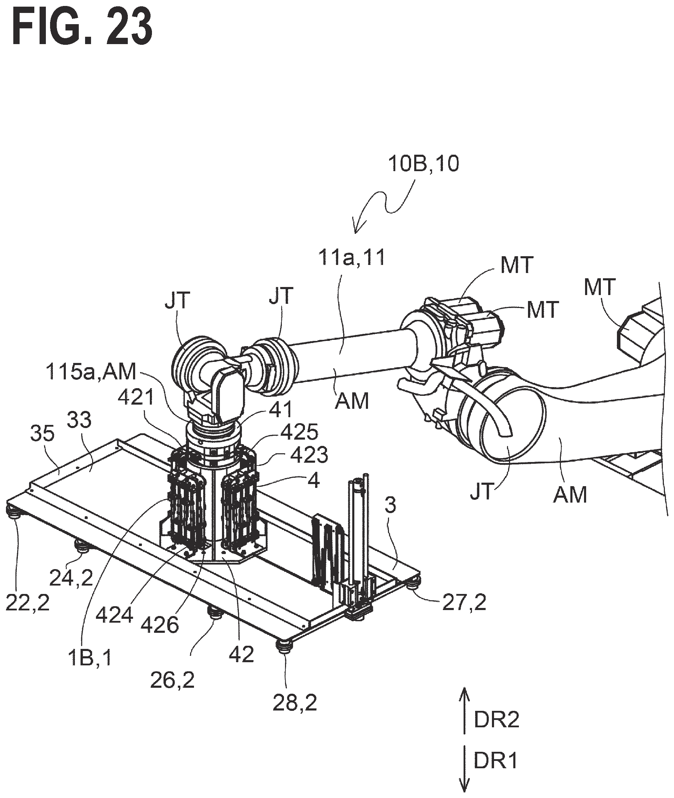

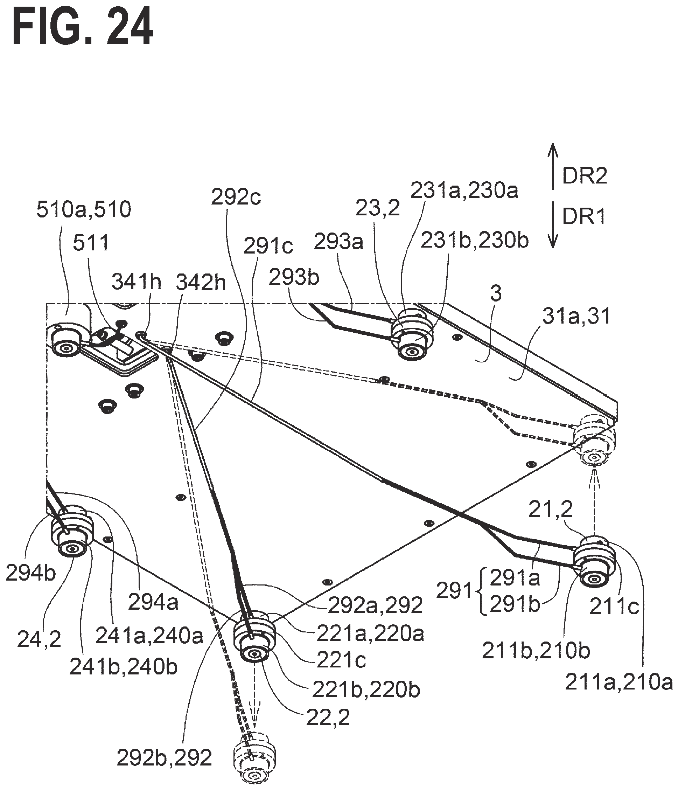

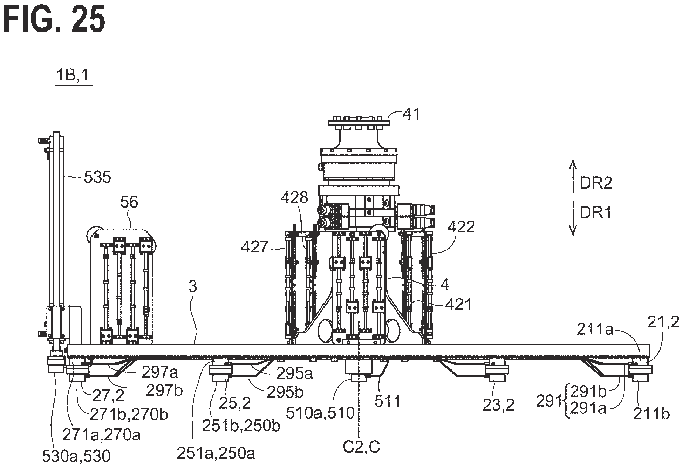

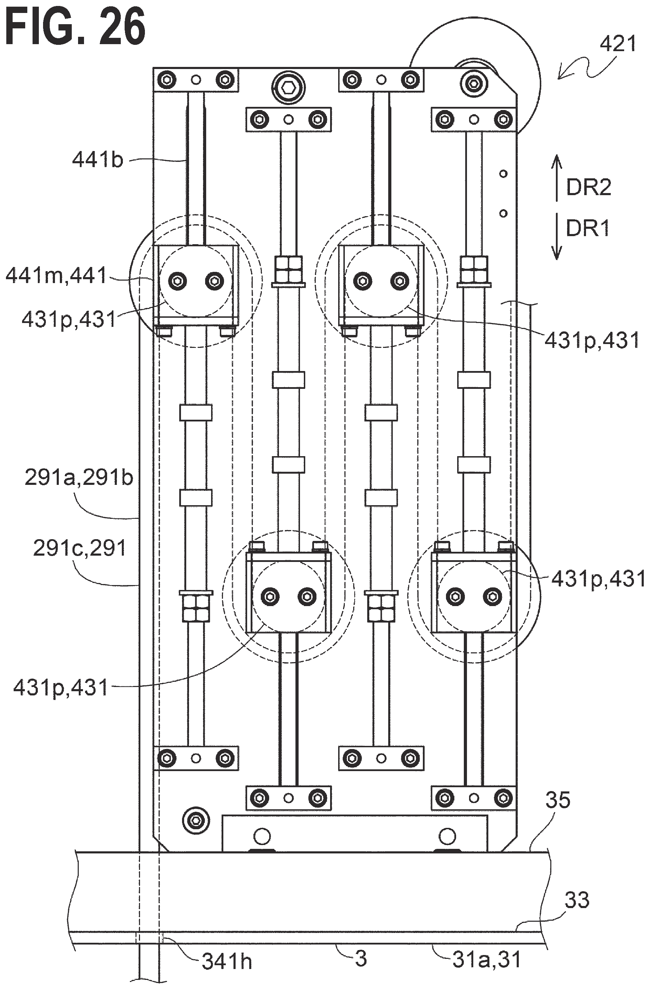

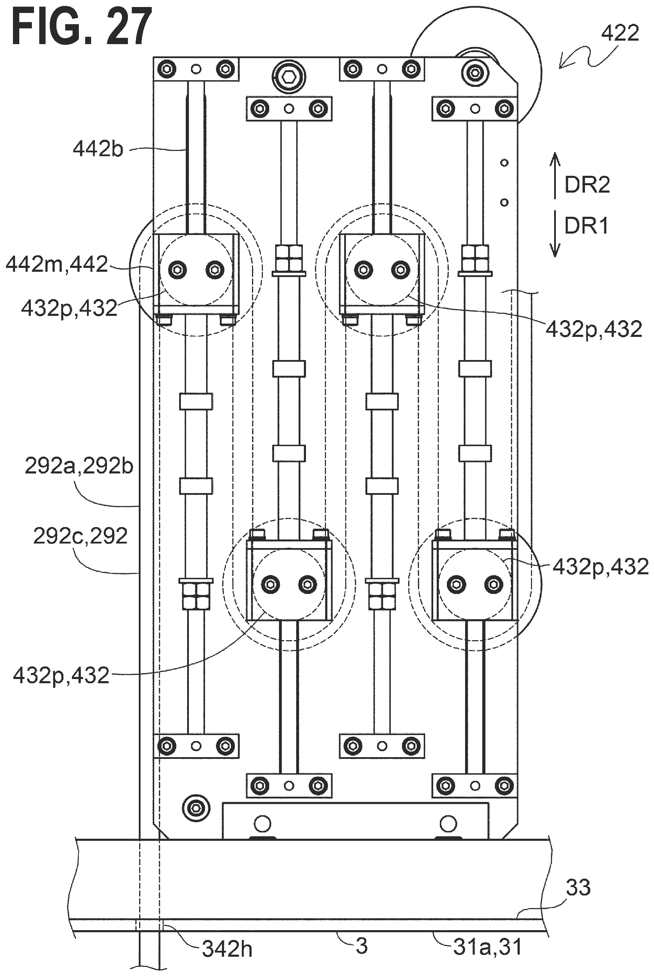

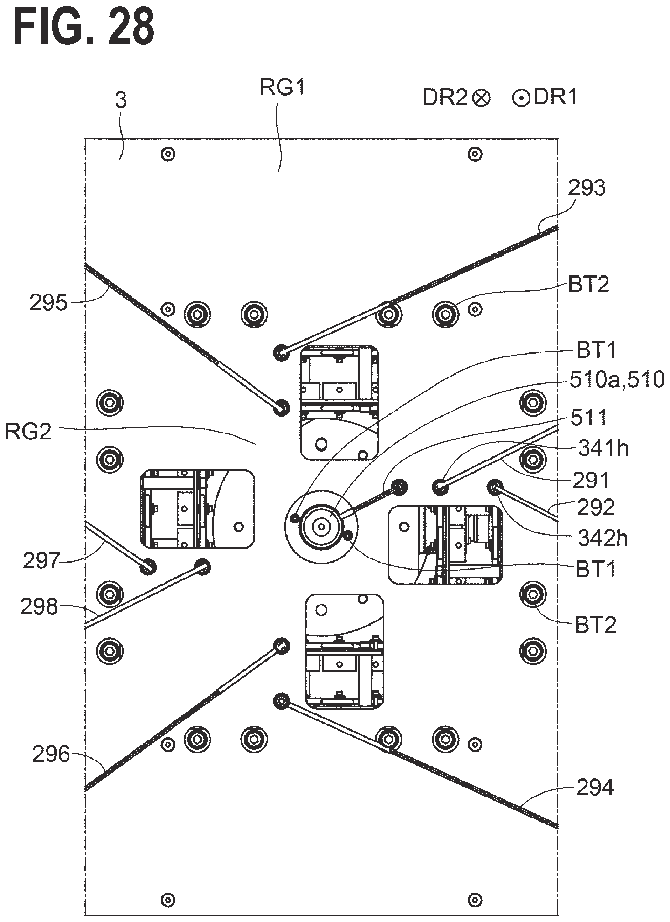

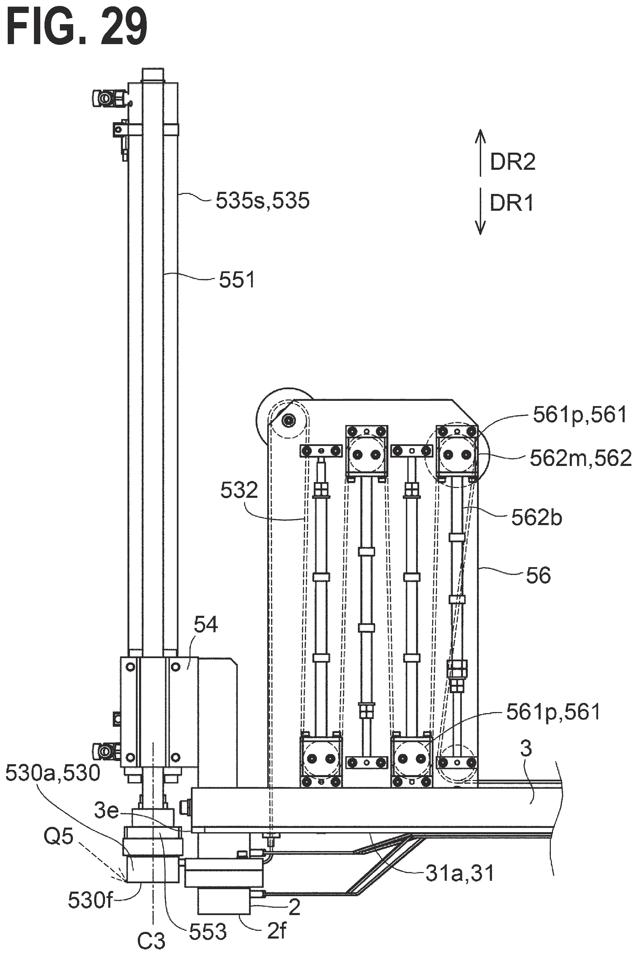

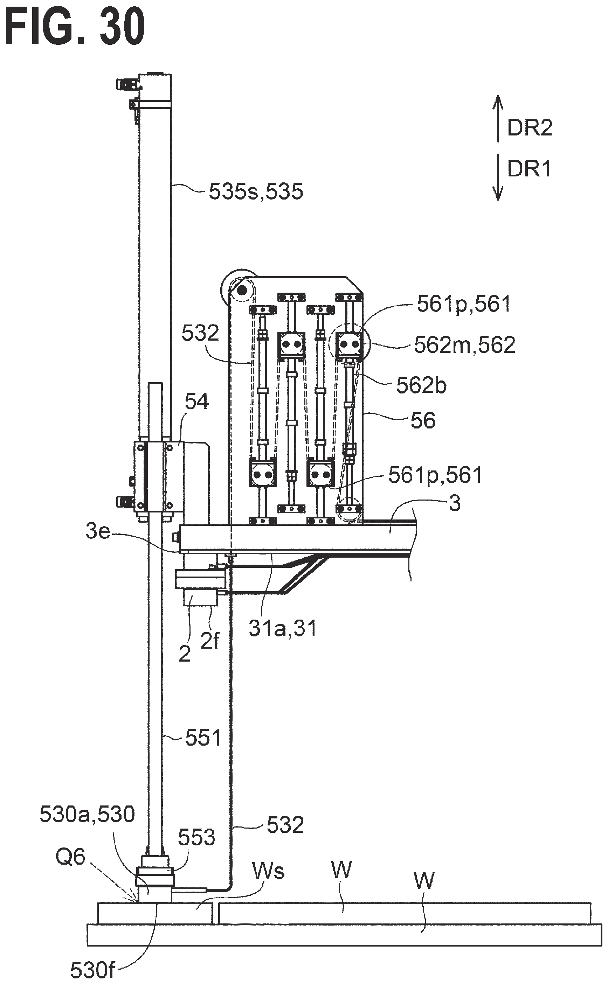

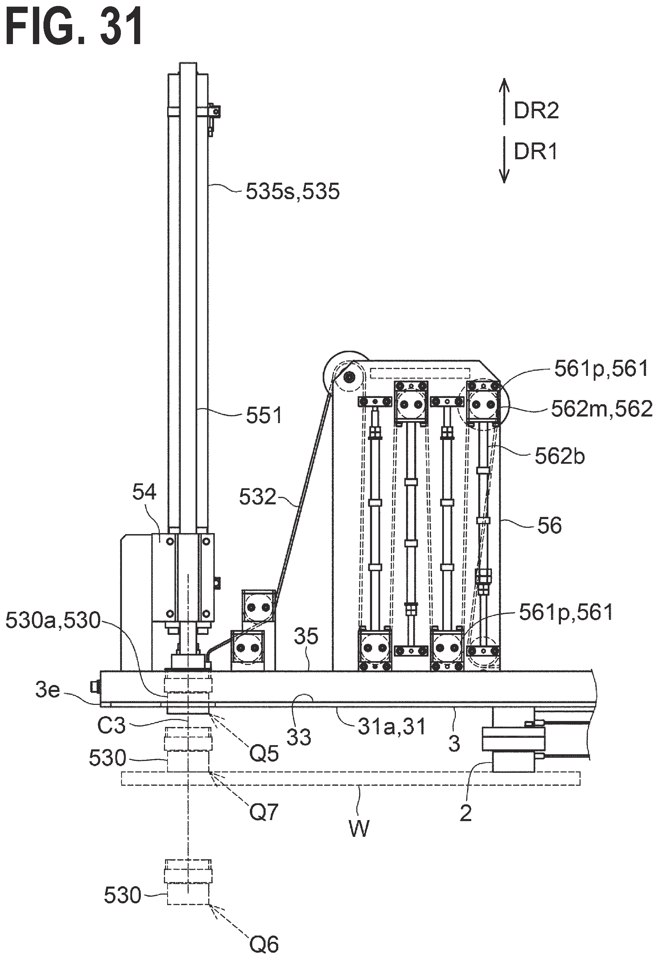

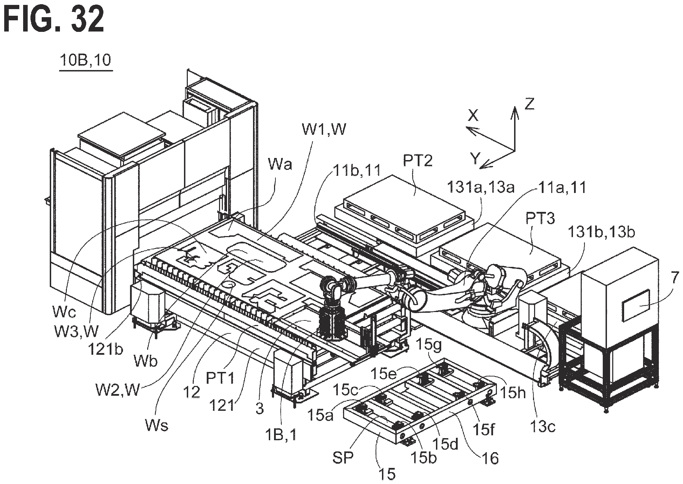

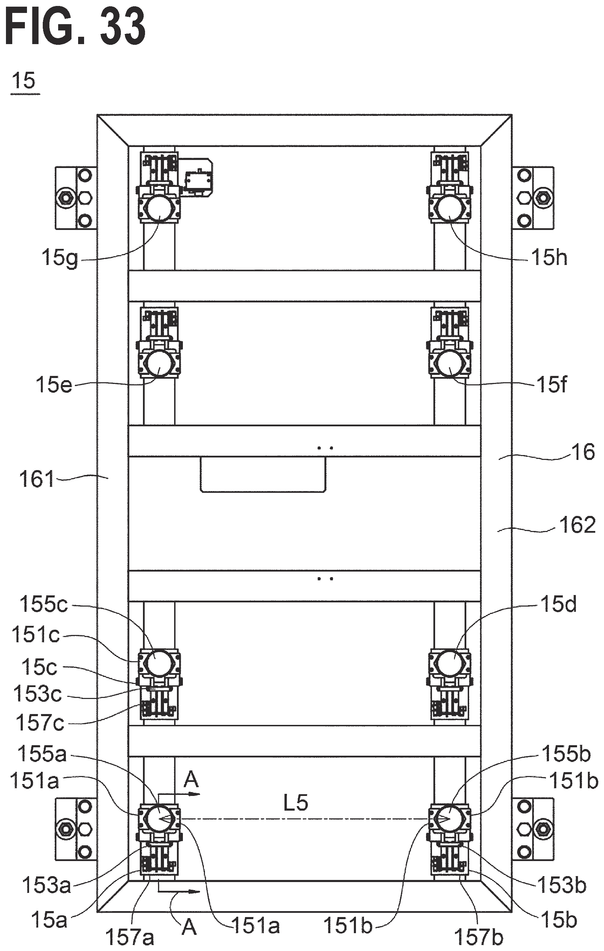

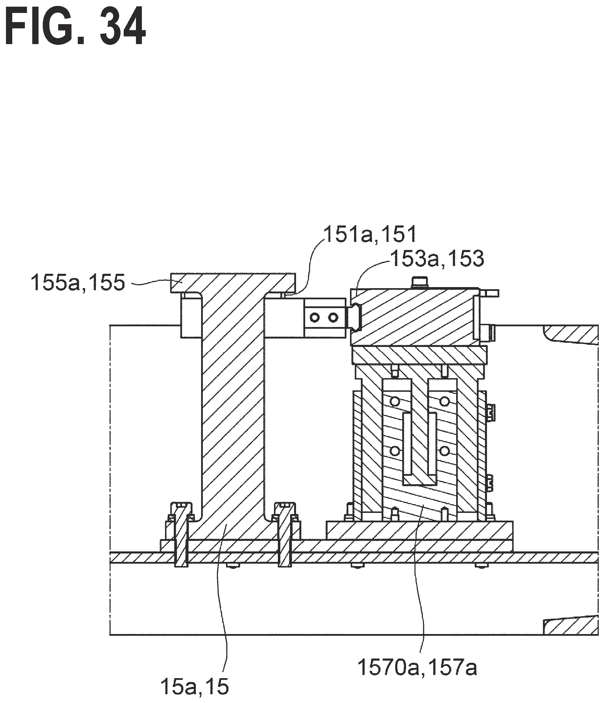

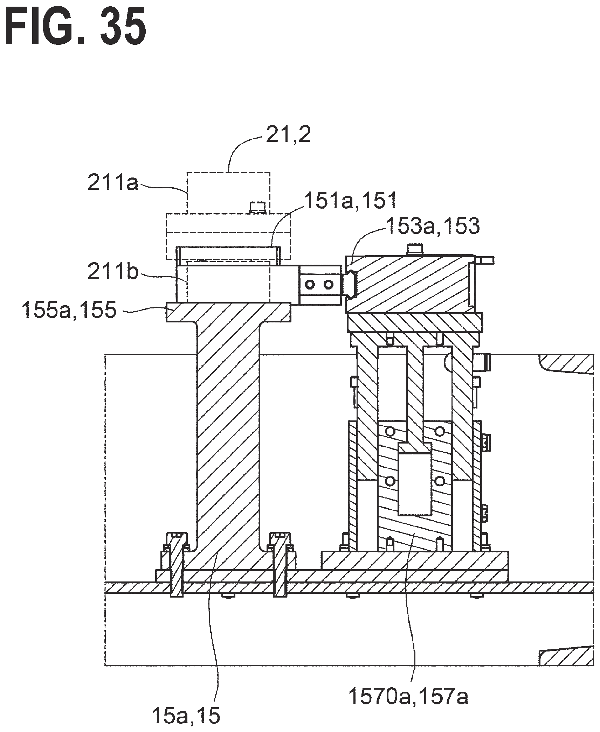

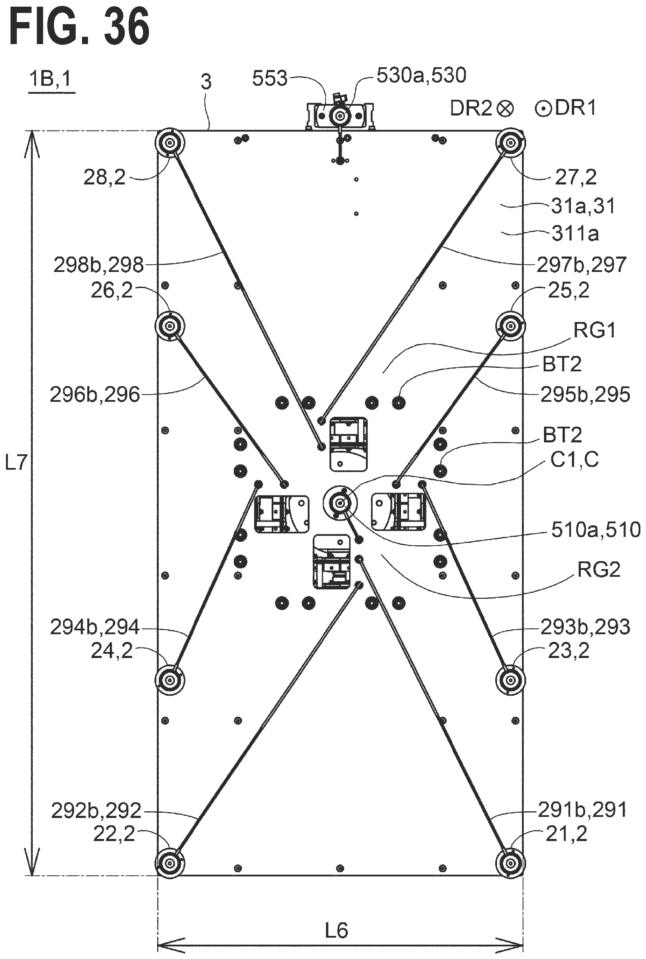

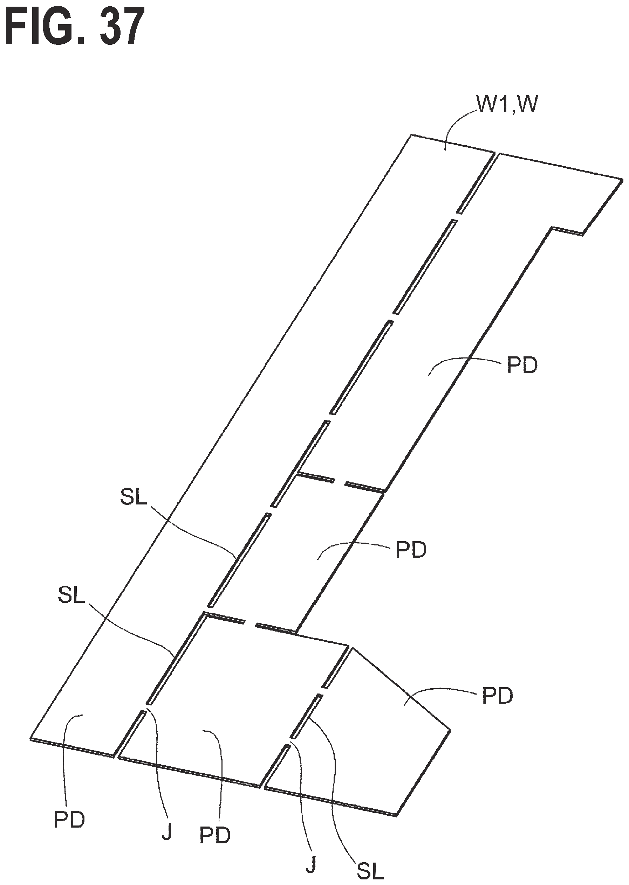

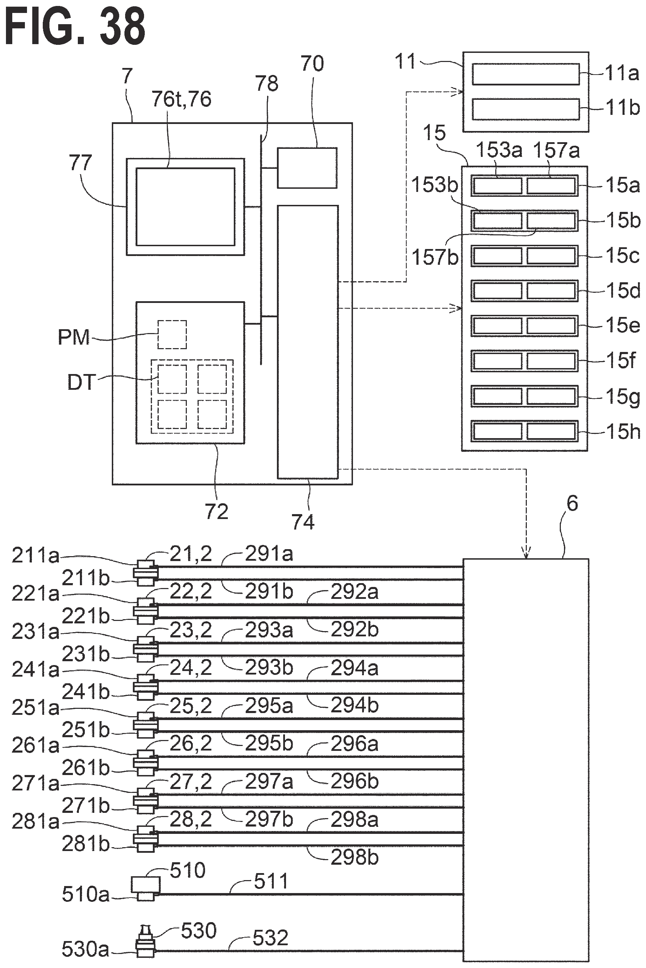

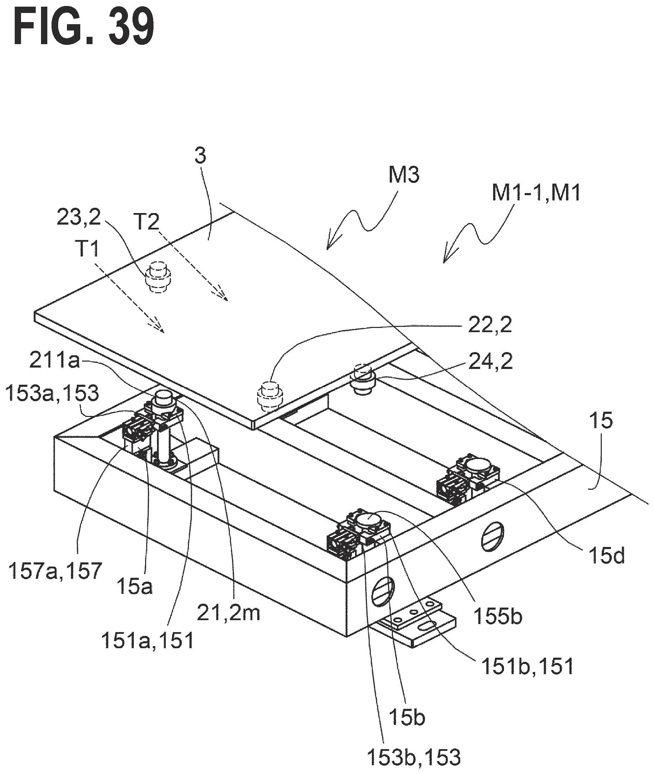

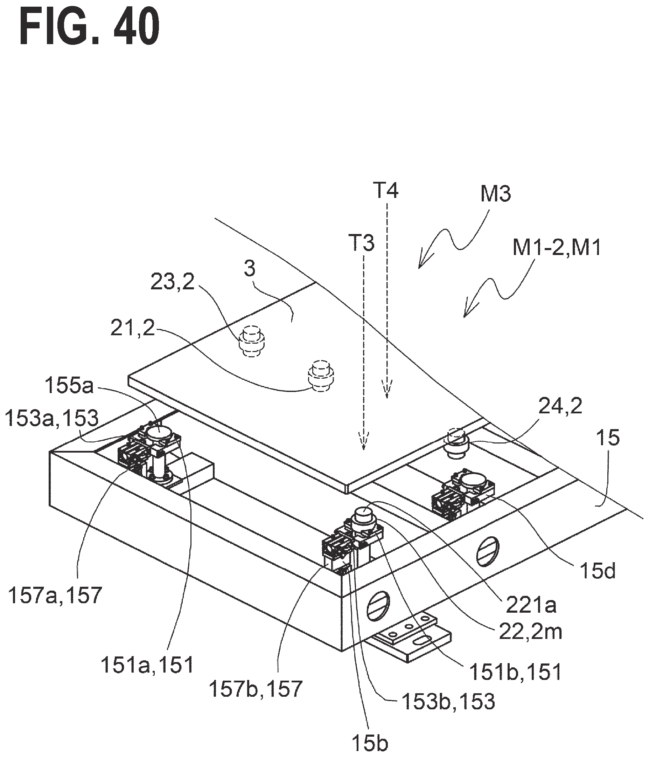

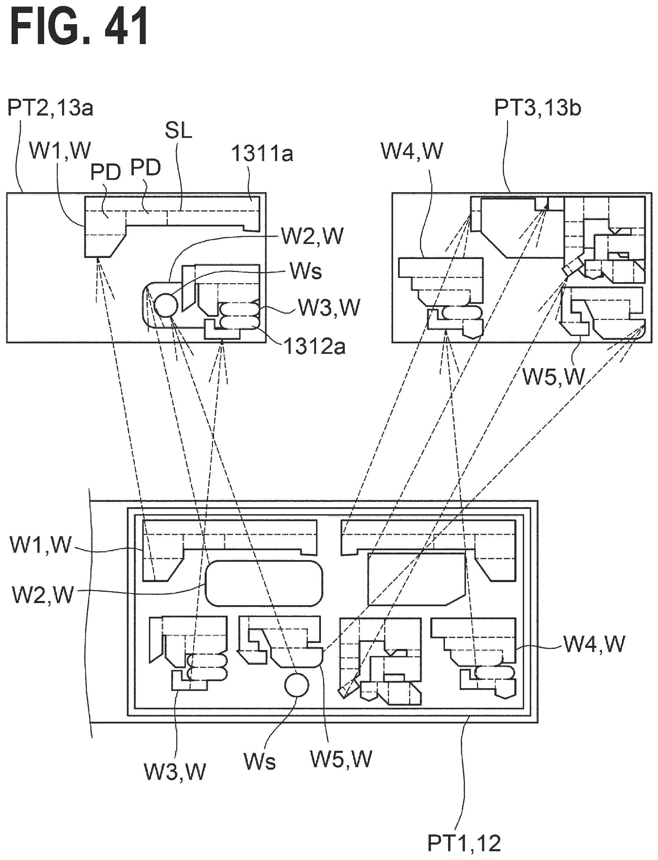

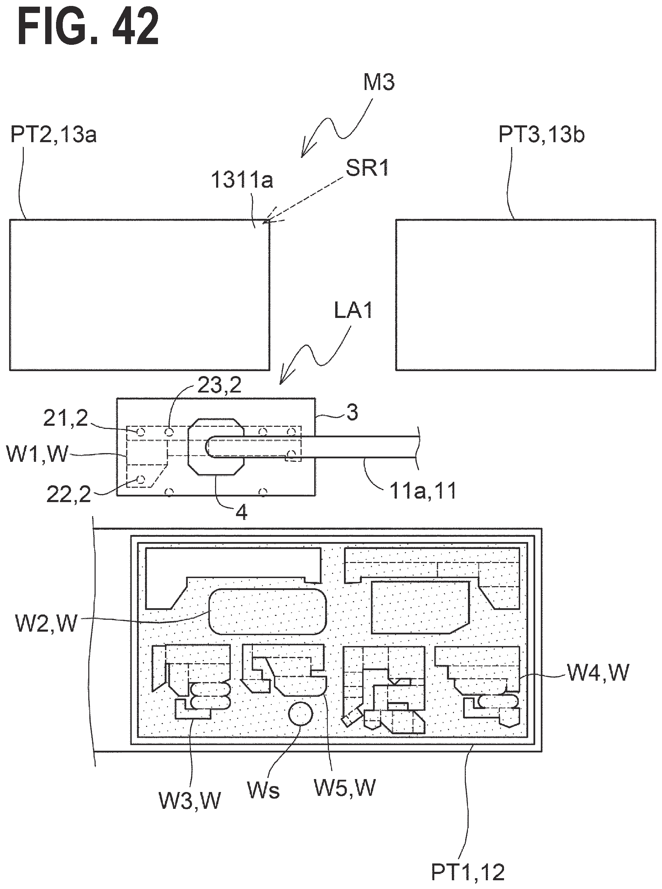

With reference to FIGs. 1 to 46, the workpiece transfer hand 1B and the workpiece transfer device 10B according to embodiment 2 will be described. FIGs. 17 to 19 are schematic perspective views schematically illustrating the workpiece transfer hand 1B according to embodiment 2. FIG. 20 is a schematic perspective view illustrating a state where the workpiece W is attracted by the plurality of attachments 2 disposed in the first layout LA1. FIGs. 21 and 22 are schematic perspective views schematically illustrating the workpiece transfer hand 1B according to embodiment 2. FIG. 23 is a schematic perspective view illustrating the workpiece transfer device 10B according to embodiment 2. FIG. 24 is a schematic perspective view illustrating a part of the workpiece transfer hand 1B according to embodiment 2. FIG. 25 is a schematic side view schematically illustrating the workpiece transfer hand 1B according to embodiment 2. FIG. 26 is a schematic side view schematically illustrating the first puller 421. FIG. 27 is a schematic side view schematically illustrating the second puller 422. FIG. 28 is a schematic bottom view schematically illustrating a part of the workpiece transfer hand 1B according to embodiment 2. FIG. 29 is a schematic side view schematically illustrating a part of the workpiece transfer hand 1B according to embodiment 2. FIG. 30 is a schematic side view schematically illustrating a state where a small workpiece Ws is attracted to a movable attraction portion 530. FIG. 31 is a schematic side view schematically illustrating a modification of the arrangement of the movable attraction portion 530. FIG. 32 is a schematic perspective view illustrating the workpiece transfer device 10B according to embodiment 2. FIG. 33 is a schematic plan view schematically illustrating an example of the attachment supporter 15. FIG. 34 is a cross-sectional view taken along a line indicated by arrows A-A in FIG. 33. FIG. 35 is a schematic cross-sectional view illustrating a state where the gripping component 151 has moved to the raised position. FIG. 36 is a schematic bottom view schematically illustrating the workpiece transfer hand 1B according to embodiment 2. FIG. 37 is a schematic perspective view illustrating an example of the workpiece W. FIG. 38 is a diagram schematically illustrating how a controller 7 can control a plurality of control target devices. FIG. 39 is a schematic perspective view illustrating how a first position change mode M1-1 is executed. FIG. 40 is a schematic perspective view illustrating how a second position change mode M1-2 is executed. In FIGs. 39 and 40, the plurality of attachments 2 located below the plate 3 are indicated by dashed lines, to facilitate recognition of the arrangement of the plurality of attachments 2 attached to the plate 3. FIG. 41 is a schematic plan view schematically illustrating how a plurality of workpieces W are sorted into a plurality of groups. FIGs. 42 to 46 are schematic plan views schematically illustrating how a sorting mode M3 is executed. In FIGs. 42 to 44, the plurality of attachments 2 and the workpieces W located below the plate 3 are indicated by dashed lines, to facilitate recognition of the arrangement of the plurality of attachments 2 attached to the plate 3 and the arrangement of the workpieces W attracted by the plurality of attachments 2.

In embodiment 2, differences from embodiment 1 will be mainly described. In embodiment 2, the redundant description on what have been described in embodiment 1 will be omitted. Thus, it is a matter of course that what have been described in embodiment 1, which are not explicitly described in embodiment 2, can be applied to embodiment 2.

As in the example illustrated in FIG. 17, the workpiece transfer hand 1B according to embodiment 2 includes: (1) the plurality of attachments 2 including the first attachment 21 capable of attracting the workpiece and the second attachment 22 capable of attracting the workpiece; and (2) the plate 3 to which the plurality of attachments 2 are attached.

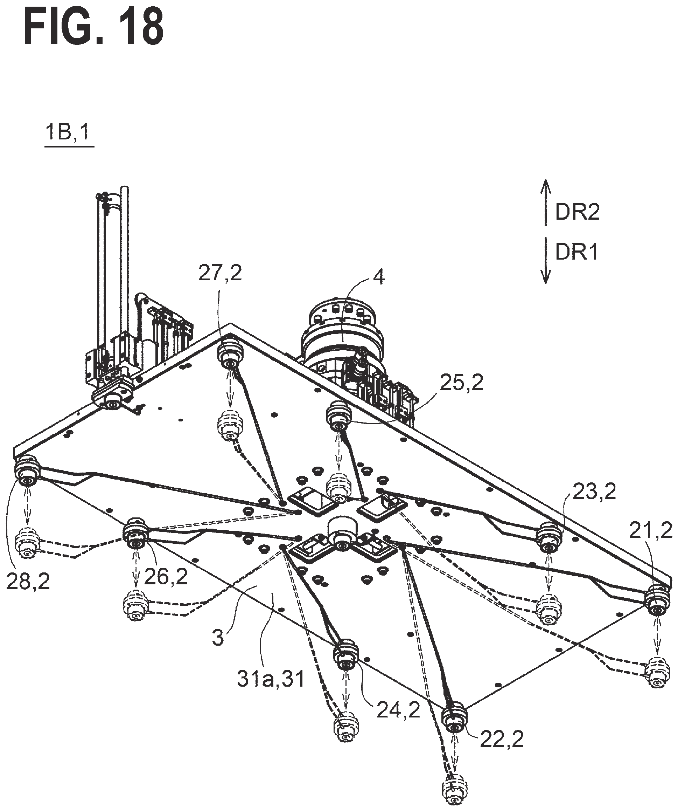

As in the example illustrated in FIG. 18, each of the plurality of attachments 2 is independently detachable from the plate 3.

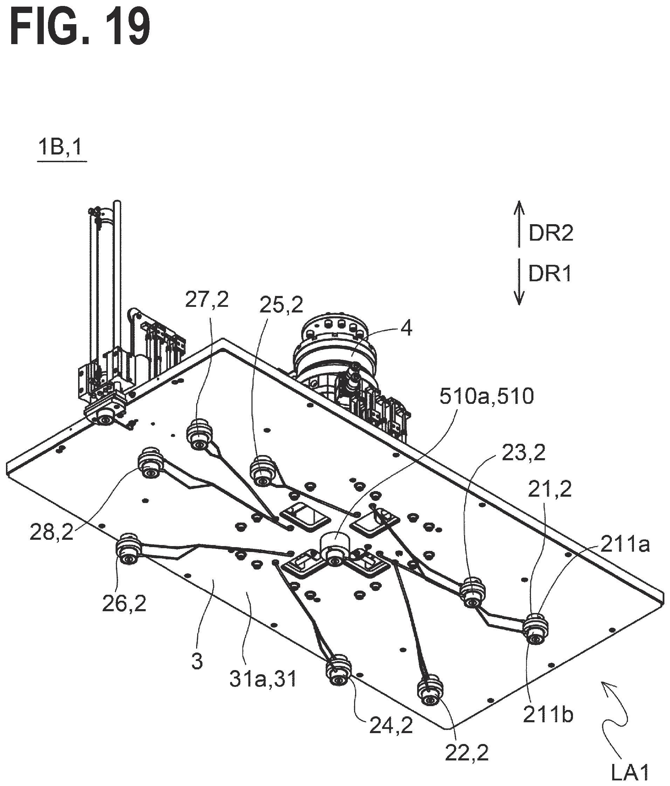

As in the example illustrated in FIG. 19, the plurality of attachments 2 are attachable to the plate 3 in the first layout LA1. As in the example illustrated in FIG. 21, the plurality of attachments 2 are reattachable to the plate 3 in the second layout LA2 different from the first layout LA1.

Thus, the workpiece transfer hand 1B according to embodiment 2 provides effects equal to the workpiece transfer hand 1A according to embodiment 1.

As in the example illustrated in FIG. 23, the workpiece transfer device 10B according to embodiment 2 includes the above-described workpiece transfer hand 1B and the hand traveling device 11 that moves the workpiece transfer hand 1B.

Thus, the workpiece transfer device 10B according to embodiment 2 provides effects equal to the workpiece transfer device 10A according to embodiment 1.

### (Optional Configurations)

Next, with reference to FIGs. 1 to 46, optional configurations that can be adopted in the workpiece transfer hand 1B according to embodiment 2 (or the workpiece transfer device 10B according to embodiment 2) or the workpiece transfer hand 1A according to embodiment 1 described above (or the workpiece transfer device 10A according to embodiment 1 described above) will be described.

### (First Attachment 21)

In the example illustrated in FIG. 24, the first attachment 21 includes the first attraction portion 210a (more specifically, the first electromagnet 211a) that attracts the plate 3, and a second attraction portion 210b (more specifically, second electromagnet 211b) that attracts the workpiece.

In the example illustrated in FIG. 24, the workpiece transfer hand 1B includes the cables 291 (more specifically, the first cable 291a and the second cable 291b) for supplying current (for example, direct current) to the first attachment 21.

When the first attachment 21 is attached to the plate 3, current is supplied to the first electromagnet 211a through the first cable 291a. Power is supplied to the first electromagnet 211a, causing the first attachment 21 to be attracted to the plate 3. When the first attachment 21 is detached from the plate 3, the power supply to the first electromagnet 211a is stopped. More specifically, after the attachment supporter 15 (see FIG. 15 or 39) supports the first attachment 21, the power supply to the first electromagnet 211a is stopped.

In the example illustrated in FIG. 20, when the workpiece W is attached to the first attachment 21, current is supplied to the second electromagnet 211b through the second cable 291b. Power is supplied to the second electromagnet 211b, causing the first attachment 21 to attract the workpiece W. When the workpiece W is detached from the first attachment 21, the power supply to the second electromagnet 211b is stopped.

In the example illustrated in FIG. 24, the first attachment 21 includes a first insulator 211c arranged between the first electromagnet 211a and the second electromagnet 211b. The first insulator 211c electrically insulates the first electromagnet 211a from the second electromagnet 211b.

In the example illustrated in FIG. 24, the plate 3 has a first through-hole part 341h formed through which the cables 291 (more specifically, the first cable 291a and the second cable 291b) pass. The cables 291 (more specifically, the first cable 291a and the second cable 291b) passing through the first through-hole part 341h traverse the attachment mounting surface 31a of the plate 3 and the back surface 33 of the plate 3.

When the cables 291 pass through the first through-hole part 341h of the plate 3, cable cluttering is alleviated, compared with a case where the cables 291 are arranged to pass through the outer side of the outer circumferential edge portion of the plate 3 (see FIG. 9). Furthermore, a risk of the cables 291 coming into contact with a device other than the workpiece transfer device 10B is reduced.

In the example illustrated in FIG. 24, both the first cable 291a and the second cable 291b pass through one, that is, the same first through-hole part 341h. The bundled region 291c where the first cable 291a and the second cable 291b are bundled can be arranged to pass through the first through-hole part 341h.

In the example illustrated in FIG. 24, when the first attachment 21 is detached from the plate 3, the cables 291 (more specifically, the first cable 291a and the second cable 291b) can be led out from the first through-hole part 341h in the first direction DR1. Therefore, the cables 291 can be easily slackened when the first attachment 21 is detached from the plate 3.

In the example illustrated in FIG. 24, when the first attachment 21 is attached to the plate 3, the cables 291 (more specifically, the first cable 291a and the second cable 291b) can be pulled in the second direction DR2 from the first through-hole part 341h. Therefore, the slack of the cables 291 can be easily reduced when the first attachment 21 is attached to the plate 3.

### (First Puller 421)

In the example illustrated in FIG. 25, the workpiece transfer hand 1B includes the first puller 421 that pulls the cables 291. The first puller 421 pulls the first cable 291a and the second cable 291b. When the cables 291 (more specifically, the first cable 291a and the second cable 291b) are pulled by the first puller 421, the slack of the cables 291 is reduced.

In the example illustrated in FIG. 26, the first puller 421 includes the first support 431 that supports a part of the cables 291, and the first mover 441 that moves the first support 431 relative to the plate 3. In the example illustrated in FIG. 26, the first support 431 includes a movable pulley 431p that supports a part of the cables 291. The first mover 441 moves the movable pulley 431p. The first support 431 may include a plurality of movable pulleys 431p.

In the example illustrated in FIG. 26, the cables 291 (more specifically, the first cable 291a and the second cable 291b) can be slackened using the first mover 441. Thus, the first attachment 21 is smoothly attached to and detached from the plate 3.

In the example illustrated in FIG. 26, the slack of the cables 291 (more specifically, the first cable 291a and the second cable 291b) can be reduced by using the first mover 441. More specifically, the cables 291 can be tensioned by using the first mover 441. In the example illustrated in FIG. 20, the first attachment 21 can attract the workpiece W with the slack of the cables 291 reduced (more specifically, with the cables 291 tensioned).

In the example illustrated in FIG. 26, the movable pulley 431p supports a part of the first cable 291a and a part of the second cable 291b. As in the example illustrated in FIG. 26, the movable pulley 431p may support a part of the bundled region 291c where the first cable 291a and the second cable 291b are bundled.

In the example illustrated in FIG. 26, the first mover 441 includes the motor 441m that moves the first support 431. The first mover 441 may include a ball screw 441b driven by the motor 441m. Alternatively, the first mover 441 may include a fluid pressure cylinder that moves the first support 431.

In the examples illustrated in FIGs. 24 and 25, the first attachment 21 and the plate supporter 4 are connected via the cables 291. Thus, the cables 291 prevent the first attachment 21 having been detached from the plate 3 from being lost.

### (Second Attachment 22)

In the example illustrated in FIG. 24, the second attachment 22 includes the third attraction portion 220a (more specifically, the third electromagnet 221a) that attracts the plate 3, and the fourth attraction portion 220b (more specifically, fourth electromagnet 221b) that attracts the workpiece.

In the example illustrated in FIG. 24, the workpiece transfer hand 1B is provided with the cables 292 (more specifically, the third cable 292a and the fourth cable 292b) for supplying current to the second attachment 22.

When the second attachment 22 is attached to the plate 3, current is supplied to the third electromagnet 221a through the third cable 292a. Power is supplied to the third electromagnet 221a, causing the second attachment 22 to be attracted to the plate 3. When the second attachment 22 is detached from the plate 3, the power supply to the third electromagnet 221a is stopped. More specifically, after the attachment supporter 15 (see FIG. 15 or 40) supports the second attachment 22, the power supply to the third electromagnet 221a is stopped.

In the example illustrated in FIG. 20, when the workpiece W is attached to the second attachment 22, current is supplied to the fourth electromagnet 221b through the fourth cable 292b. Power is supplied to the fourth electromagnet 221b, causing the second attachment 22 to attract the workpiece W. When the workpiece W is detached from the second attachment 22, the power supply to the fourth electromagnet 221b is stopped.

In the example illustrated in FIG. 24, the second attachment 22 includes a second insulator 221c arranged between the third electromagnet 221a and the fourth electromagnet 221b. The second insulator 221c electrically insulates the third electromagnet 221a from the fourth electromagnet 221b.

In the example illustrated in FIG. 24, the plate 3 has a second through-hole part 342h formed through which the cables 292 (more specifically, the third cable 292a and the fourth cable 292b) pass. The cables 292 (more specifically, the third cable 292a and the fourth cable 292b) passing through the second through-hole part 342h traverse the attachment mounting surface 31a of the plate 3 and the back surface 33 of the plate 3.

When the cables 292 pass through the second through-hole part 342h of the plate 3, cable cluttering is alleviated, compared with a case where the cables 292 are arranged to pass through the outer side of the outer circumferential edge portion of the plate 3 (see FIG. 9). Furthermore, a risk of the cables 292 coming into contact with a device other than the workpiece transfer device 10B is reduced.

In the example illustrated in FIG. 24, both the third cable 292a and the fourth cable 292b pass through one, that is, the same second through-hole part 342h. The bundled region 292c where the third cable 292a and the fourth cable 292b are bundled can be arranged to pass through the second through-hole part 342h.

In the example illustrated in FIG. 24, when the second attachment 22 is detached from the plate 3, the cables 292 (more specifically, the third cable 292a and the fourth cable 292b) can be led out from the second through-hole part 342h in the first direction DR1. Therefore, the cables 292 can be easily slackened when the second attachment 22 is detached from the plate 3.

In the example illustrated in FIG. 24, when the second attachment 22 is attached to the plate 3, the cables 292 (more specifically, the third cable 292a and the fourth cable 292b) can be pulled in the second direction DR2 from the second through-hole part 342h. Therefore, the slack of the cables 292 can be easily reduced when the second attachment 22 is attached to the plate 3.

### (Second Puller 422)

In the example illustrated in FIG. 27, the workpiece transfer hand 1B includes the second puller 422 that pulls the cables 292. The second puller 422 pulls the third cable 292a and the fourth cable 292b. When the cables 292 (more specifically, the third cable 292a and the fourth cable 292b) are pulled by the second puller 422, the slack of the cables 292 is reduced.

In the example illustrated in FIG. 27, the second puller 422 includes the second support 432 that supports a part of the cables 292, and the second mover 442 that moves the second support 432 relative to the plate 3. In the example illustrated in FIG. 27, the second support 432 includes a movable pulley 432p that supports a part of the cables 292. The second mover 442 moves the movable pulley 432p. The second support 432 may include a plurality of movable pulleys 432p.

In the example illustrated in FIG. 27, the cables 292 (more specifically, the third cable 292a and the fourth cable 292b) can be slackened using the second mover 442. Thus, the second attachment 22 is smoothly attached to and detached from the plate 3.

In the example illustrated in FIG. 27, the slack of the cables 292 (more specifically, the third cable 292a and the fourth cable 292b) can be reduced by using the second mover 442. More specifically, the cables 292 can be tensioned by using the second mover 442. In the example illustrated in FIG. 20, the second attachment 22 can attract the workpiece W with the slack of the cables 292 reduced (more specifically, with the cables 292 tensioned).

In the example illustrated in FIG. 27, the movable pulley 432p supports a part of the third cable 292a and a part of the fourth cable 292b. As in the example illustrated in FIG. 27, the movable pulley 432p may support a part of the bundled region 292c where the third cable 292a and the fourth cable 292b are bundled.

In the example illustrated in FIG. 27, the second mover 442 includes the motor 442m that moves the second support 432. The second mover 442 may include a ball screw 442b driven by the motor 442m. Alternatively, the second mover 442 may include a fluid pressure cylinder that moves the second support 432.

### (Third Attachment 23)

In the example illustrated in FIG. 24, the plurality of attachments 2 include the third attachment 23. In the example illustrated in FIG. 24, the third attachment 23 includes the fifth attraction portion 230a (more specifically, the fifth electromagnet 231a) that attracts the plate 3 and the sixth attraction portion 230b (more specifically, the sixth electromagnet 231b) that attracts a workpiece.

In the example illustrated in FIG. 24, the workpiece transfer hand 1B includes the fifth cable 293a for supplying current to the fifth electromagnet 231a and the sixth cable 293b for supplying current to the sixth electromagnet 231b.

### (Third Puller 423)

In the example illustrated in FIG. 23, the workpiece transfer hand 1B includes the third puller 423 that pulls the fifth cable 293a and the sixth cable 293b.

### (Fourth Attachment 24)

In the example illustrated in FIG. 24, the plurality of attachments 2 include a fourth attachment 24. In the example illustrated in FIG. 24, the fourth attachment 24 includes a seventh attraction portion 240a (more specifically, a seventh electromagnet 241a) that attracts the plate 3 and an eighth attraction portion 240b (more specifically, an eighth electromagnet 241b) that attracts a workpiece. In the example illustrated in FIG. 24, the workpiece transfer hand 1B includes a seventh cable 294a for supplying current to the seventh electromagnet 241a and an eighth cable 294b for supplying current to the eighth electromagnet 241b.

### (Fourth Puller 424)

In the example illustrated in FIG. 23, the workpiece transfer hand 1B includes a fourth puller 424 that pulls the seventh cable 294a and the eighth cable 294b.

### (Fifth Attachment 25)

In the example illustrated in FIG. 25, the plurality of attachments 2 include a fifth attachment 25. In the example illustrated in FIG. 25, the fifth attachment 25 includes a ninth attraction portion 250a (more specifically, a ninth electromagnet 251a) that attracts the plate 3 and a tenth attraction portion 250b (more specifically, a tenth electromagnet 251b) that attracts a workpiece. In the example illustrated in FIG. 25, the workpiece transfer hand 1B includes a ninth cable 295a for supplying current to the ninth electromagnet 251a and a tenth cable 295b for supplying current to the tenth electromagnet 251b.

### (Fifth Puller 425)

In the example illustrated in FIG. 23, the workpiece transfer hand 1B includes a fifth puller 425 that pulls the ninth cable 295a and the tenth cable 295b.

### (Sixth Attachment 26)

In the example illustrated in FIG. 21, the plurality of attachments 2 include a sixth attachment 26. In the example illustrated in FIG. 21, the sixth attachment 26 includes an eleventh attraction portion 260a (more specifically, an eleventh electromagnet 261a) that attracts the plate 3 and a twelfth attraction portion 260b (more specifically, a twelfth electromagnet 261b) that attracts a workpiece. In the example illustrated in FIG. 21, the workpiece transfer hand 1B includes an eleventh cable 296a for supplying current to the eleventh electromagnet 261a and a twelfth cable 296b for supplying current to the twelfth electromagnet 261b.

### (Sixth Puller 426)

In the example illustrated in FIG. 23, the workpiece transfer hand 1B includes a sixth puller 426 that pulls the eleventh cable 296a and the twelfth cable 296b.

### (Seventh Attachment 27)

In the example illustrated in FIG. 25, the plurality of attachments 2 include a seventh attachment 27. In the example illustrated in FIG. 25, the seventh attachment 27 includes a thirteenth attraction portion 270a (more specifically, a thirteenth electromagnet 271a) that attracts the plate 3 and a fourteenth attraction portion 270b (more specifically, a fourteenth electromagnet 271b) that attracts a workpiece. In the example illustrated in FIG. 25, the workpiece transfer hand 1B includes a thirteenth cable 297a for supplying current to the thirteenth electromagnet 271a and a fourteenth cable 297b for supplying current to the fourteenth electromagnet 271b.

### (Seventh Puller 427)

In the example illustrated in FIG. 25, the workpiece transfer hand 1B includes a seventh puller 427 that pulls the thirteenth cable 297a and the fourteenth cable 297b.

### (Eighth Attachment 28)

In the example illustrated in FIG. 22, the plurality of attachments 2 include an eighth attachment 28. In the example illustrated in FIG. 22, the eighth attachment 28 includes a fifteenth attraction portion 280a (more specifically, a fifteenth electromagnet 281a) that attracts the plate 3 and a sixteenth attraction portion 280b (more specifically, a sixteenth electromagnet 281b) that attracts a workpiece. In the example illustrated in FIG. 22, the workpiece transfer hand 1B includes a fifteenth cable 298a for supplying current to the fifteenth electromagnet 281a and a sixteenth cable 298b for supplying current to the sixteenth electromagnet 281b.

### (Eighth Puller 428)

In the example illustrated in FIG. 25, the workpiece transfer hand 1B includes an eighth puller 428 that pulls the fifteenth cable 298a and the sixteenth cable 298b.

### (Number of Attachments 2)

In the example illustrated in FIG. 17, the number of attachments 2, which are attachable to the plate 3 and are capable of attracting a workpiece, is eight. Alternatively, the number of attachments 2 may be three, four, five, six, seven, nine, or ten. Still alternatively, the number of attachments 2 may be 11 to 20, or 21 to 30. Yet still alternatively, the number of attachments 2 may be 31 or more.

### (Fixed Attraction Portion 510)

As in the example illustrated in FIG. 17, the workpiece transfer hand 1B may include a fixed attraction portion 510 capable of attracting the workpiece W. The fixed attraction portion 510 is permanently fixed to the plate 3.

When the workpiece transfer hand 1B includes the fixed attraction portion 510 permanently fixed to the plate 3, the layout of the plurality of attraction portions can be changed in a short period of time, compared with a case where all of the attraction portions are arranged on the attachment 2. For example, the plurality of attachments 2 may be attached around the fixed attraction portion 510, with reference to the position of the fixed attraction portion 510.

In the example illustrated in FIG. 17, the fixed attraction portion 510 is arranged in a center portion of the plate 3. More specifically, the fixed attraction portion 510 is arranged on the central axis C2 of the plate supporter 4 that supports the plate 3.

In the example illustrated in FIG. 25, the fixed attraction portion 510 is an electromagnet 510a (in other words, a fixed electromagnet) that attracts the workpiece W. In this case, the workpiece transfer hand 1B includes a cable 511 for supplying power to the electromagnet 510a.

In the example illustrated in FIG. 28, the fixed attraction portion 510 (more specifically, the electromagnet 510a) is fixed to the plate 3 using bolts BT1.

### (Fixing of Plate 3 to Plate Supporter 4)

In the example illustrated in FIG. 28, the plate 3 is fixed to the plate supporter 4 (see FIG. 25) with a plurality of bolts BT2. In the example illustrated in FIG. 28, a central region RG2 of the plate 3 is fixed to the plate supporter 4 with the plurality of bolts BT2. The central region RG2 of the plate 3 may be set as a region where the attachment 2 is not arranged. In the example illustrated in FIG. 28, the fixed attraction portion 510 (more specifically, the electromagnet 510a) is fixed to the central region RG2 of the plate 3. In the example illustrated in FIG. 28, the central region RG2 of the plate 3 is provided with the above-described first through-hole part 341h and the above-described second through-hole part 342h.

As in the example illustrated in FIG. 28, the attachable region RG1 to which any one of the plurality of attachments can be attached may be provided around the central region RG2 of the plate 3. The attachable region RG1, to which any one of the plurality of attachments can be attached, may be continuously present 360 degrees around the central region RG2 of the plate 3.

### (Movable Attraction Portion 530)

As in the example illustrated in FIG. 25, the workpiece transfer hand 1B may include the movable attraction portion 530 capable of attracting another workpiece (for example, the small workpiece Ws smaller than the first workpiece W1) and an attraction portion mover 535.

In the example illustrated in FIG. 30, the movable attraction portion 530 is an electromagnet 530a (in other words, a movable electromagnet) that attracts another workpiece (for example, the small workpiece Ws). In the example illustrated in FIG. 30, the workpiece transfer hand 1B includes a cable 532 for supplying power to the electromagnet 530a (in other words, the movable electromagnet).

The attraction portion mover 535 moves the movable attraction portion 530 (for example, the electromagnet 530a) between a retracted position Q5 (see FIG. 29) and an advanced position Q6 (see FIG. 30).

In the example illustrated in FIG. 30, the movable attraction portion 530 can release the small workpiece Ws while the movable attraction portion 530 is at the advanced position Q6. In the example illustrated in FIG. 30, the small workpiece Ws released from the movable attraction portion 530 is stacked on the workpiece W. In the example illustrated in FIG. 30, the movable attraction portion 530 is at the advanced position Q6, and thus the attachment 2 does not interfere with the workpiece W, when the small workpiece Ws is stacked on the workpiece W.

In the example illustrated in FIG. 30, when the movable attraction portion 530 is at the advanced position Q6, an end surface 530f of the movable attraction portion 530 on the first direction DR1 side is located more on the first direction DR1 side than an end surface 2f (for example, an end surface of the first attachment 21 on the first direction DR1 side) of the attachment 2 on the first direction DR1 side. As in the example illustrated in FIG. 29, when the movable attraction portion 530 is at the retracted position Q5, the end surface 530f of the movable attraction portion 530 on the first direction DR1 side may be located more on the second direction DR2 side than the end surface 2f (for example, the end surface of the first attachment 21 on the first direction DR1 side) of the attachment 2 on the first direction DR1 side. In this case, interference between the movable attraction portion 530 and the workpiece W is suppressed while the movable attraction portion 530 is not in use.

In the example illustrated in FIG. 29, the movable attraction portion 530 is disposed more on the outer side than an outer circumferential edge 3e of the plate 3 as viewed in a direction along a central axis C3 of the movable attraction portion 530 (more specifically, as viewed in a direction along the second direction DR2). In this case, interference between the movable attraction portion 530 and the attachment 2 is prevented when the attachment 2 is attached to any position of the plate 3.

Alternatively, as in the example illustrated in FIG. 31, the movable attraction portion 530 may be arranged more on the inner side than the outer circumferential edge 3e of the plate 3, as viewed in a direction along the central axis C3 of the movable attraction portion 530 (more specifically, as viewed in a direction along the second direction DR2). In the example illustrated in FIG. 31, the attraction portion mover 535 moves the movable attraction portion 530 between the retracted position Q5 and the advanced position Q6. The position of the movable attraction portion 530 may be maintainable at an intermediate position Q7 between the retracted position Q5 and the advanced position Q6. In this case, the movable attraction portion 530 at the intermediate position Q7 and the attachment 2 attached to the plate 3 may be capable of attracting one workpiece W.

In the examples illustrated in FIGs. 29 and 30, the attraction portion mover 535 moves the movable attraction portion 530 (for example, the electromagnet 530a) in a direction crossing the attachment mounting surface 31a (or the first main surface 31). In the examples illustrated in FIGs. 29 and 30, the attraction portion mover 535 moves the movable attraction portion 530 (for example, the electromagnet 530a) in a direction orthogonal to the attachment mounting surface 31a (or the first main surface 31).

As in the example illustrated in FIG. 29, the attraction portion mover 535 may include a fluid pressure cylinder 535s that moves the movable attraction portion 530. Alternatively, the attraction portion mover 535 may include a motor that moves the movable attraction portion 530.

As in the examples illustrated in FIGs. 29 and 30, the workpiece transfer hand 1B may include a guide component 54 that guides the movement of the movable attraction portion 530. In the examples illustrated in FIGs. 29 and 30, the movable attraction portion 530 and a guide rod 551 are attached to a block 553. In the examples illustrated in FIGs. 29 and 30, the guide rod 551 is guided by the guide component 54. In the examples illustrated in FIGs. 29 and 30, the guide component 54 is fixed to the plate 3.

### (Puller 56)

In the examples illustrated in FIGs. 29 and 30, the workpiece transfer hand 1B includes a puller 56 that pulls the cable 532. When the cable 532 is pulled by the puller 56, the slack of the cable 532 is reduced.

In the examples illustrated in FIGs. 29 and 30, the puller 56 includes a support 561 that supports a part of the cable 532 and a mover 562 that moves the support 561 relative to the plate 3. In the examples illustrated in FIGs. 29 and 30, the support 561 includes a movable pulley 561p that supports a part of the cable 532. The mover 562 moves the movable pulley 561p. The support 561 may include a plurality of movable pulleys 561p.

In the examples illustrated in FIGs. 29 and 30, the slack of the cable 532 can be reduced using the mover 562. More specifically, the cable 532 can be tensioned using the mover 562.

In the examples illustrated in FIGs. 29 and 30, the mover 562 includes a motor 562m that moves the support 561 (more specifically, the movable pulley 561p). The mover 562 may include a ball screw 562b driven by the motor 562m. Alternatively, the mover 562 may include a fluid pressure cylinder that moves the support 561.

In the examples illustrated in FIGs. 29 and 30, the puller 56 is fixed to the plate 3.

### (Attachment Supporter 15)

In the example illustrated in FIG. 32, the workpiece transfer device 10B includes the attachment supporter 15 that supports the attachment 2, out of the plurality of attachments 2, that has been detached from the plate 3.

In the example illustrated in FIG. 33, the attachment supporter 15 includes a first supporter 15a capable of supporting the first attachment 21. The first supporter 15a may include a first gripping component 151a capable of gripping the first attachment 21, and a first driver 153a that moves the first gripping component 151a between the open position and the closed position. The first supporter 15a may include a first lifting device 157a that moves the first gripping component 151a between the lowered position and the raised position. As in the example illustrated in FIG. 34, the first lifting device 157a may include a fluid pressure cylinder 1570a that moves the first gripping component 151a up and down. Alternatively, the first lifting device 157a may include a motor that moves the first gripping component 151a up and down.

The first supporter 15a may include a first stand 155a for placing the first attachment 21. In the examples illustrated in FIGs. 34 and 35, the first lifting device 157a moves the first gripping component 151a relative to the first stand 155a in a direction parallel to the vertical direction.

In the example illustrated in FIG. 33, the attachment supporter 15 includes a second supporter 15b capable of supporting the second attachment 22. The second supporter 15b may include a second gripping component 151b capable of gripping the second attachment 22, and a second driver 153b that moves the second gripping component 151b between the open position and the closed position. The second supporter 15b may include a second lifting device 157b that moves the second gripping component 151b between the lowered position and the raised position.

The second supporter 15b may include a second stand 155b for placing the second attachment 22. The second lifting device 157b moves the second gripping component 151b relative to the second stand 155b in a direction parallel to the vertical direction.

In the examples illustrated in FIGs. 32 and 33, the attachment supporter 15 includes the first supporter 15a capable of supporting the first attachment 21 detached from the plate 3, and the second supporter 15b capable of supporting the second attachment 22 detached from the plate 3. The attachment position of the first attachment 21 with respect to the plate 3 is changed by the movement of the workpiece transfer hand 1B relative to the first attachment 21 supported by the first supporter 15a. The attachment position of the second attachment 22 with respect to the plate 3 is changed by the movement of the workpiece transfer hand 1B relative to the second attachment 22 supported by the second supporter 15b.

In the examples illustrated in FIGs. 32 and 33, the attachment supporter 15 includes a plurality of supporters including the first supporter 15a and the second supporter 15b. In this case, the distance of the plate 3 relative to the attachment supporter 15 can be made short when the attachment positions of the plurality of attachments 2 are changed. For example, when the first attachment 21 is detached from the plate 3 and the first attachment 21 is reattached to the plate 3 using the first supporter 15a and then the second attachment 22 is detached from the plate 3 and the second attachment 22 is reattached to the plate 3 using the second supporter 15b, the distance of the movement of the plate 3 relative to the attachment supporter 15 can be made short.

In the example illustrated in FIG. 33, the attachment supporter 15 includes a third supporter 15c capable of supporting the third attachment 23. The third supporter 15c includes a third gripping component 151c capable of gripping the third attachment 23, and a third driver 153c that moves the third gripping component 151c between the open position and the closed position. The third supporter 15c may include a third lifting device 157c that moves the third gripping component 151c between the lowered position and the raised position. The third supporter 15c may include a third stand 155c for placing the third attachment 23.

In the example illustrated in FIG. 33, the attachment supporter 15 includes a fourth supporter 15d capable of supporting the fourth attachment 24. The attachment supporter 15 may include a fifth supporter 15e capable of supporting the fifth attachment 25 and/or a sixth supporter 15f capable of supporting the sixth attachment 26. The attachment supporter 15 may include a seventh supporter 15g capable of supporting the seventh attachment 27 and/or an eighth supporter 15h capable of supporting the eighth attachment 28.

The attachment supporter 15 may include supporters the number of which is equal to or larger than the number of attachments 2. For example, when the number of attachments 2 capable of attracting the plate 3 in the workpiece transfer hand 1B is N1 ("N1" is any natural number equal to or larger than 3), the attachment supporter 15 may include "N1" or more supporters. In this case, the attachment supporter 15 can support all the attachments 2 detached from the plate 3 while the workpiece transfer hand 1B is not in use.

Alternatively, the number of supporters in the attachment supporter 15 may be smaller than the number of attachments 2. For example, the first supporter 15a may selectively support the first attachment 21 and the third attachment 23, and the second supporter 15b may selectively support the second attachment 22 and the fourth attachment 24.

In the example illustrated in FIG. 32, the attachment supporter 15 includes an outer frame 16 that surrounds the first supporter 15a and the second supporter 15b. In the example illustrated in FIG. 32, a large part of the first supporter 15a and a large part of the second supporter 15b are arranged in an inner space SP defined by the outer frame 16. In this case, an upward protrusion amount of the first supporter 15a from the outer frame 16 and an upward protrusion amount of the second supporter 15b from the outer frame 16 can be made small. Thus, unintentional interference between each of the plurality of attachments 2 attached to the plate 3 and each of the first supporter 15a and the second supporter 15b is suppressed.

In the example illustrated in FIG. 33, the outer frame 16 includes a first side wall 161 and a second side wall 162 opposite to the first side wall 161. In the example illustrated in FIG. 33, the first supporter 15a is arranged in the vicinity of the first side wall 161, and the second supporter 15b is arranged in the vicinity of the second side wall 162. The first supporter 15a, the third supporter 15c, and the fifth supporter 15e may be arranged along the first side wall 161. The second supporter 15b, the fourth supporter 15d, and the sixth supporter 15f may be arranged along the second side wall 162.

The distance between the first supporter 15a and the second supporter 15b may be substantially equal to the width of the plate 3. For example, a distance L5 between the center of the first stand 155a of the first supporter 15a and the center of the second stand 155b of the second supporter 15b may be 80% or more and 100% or less of a width L6 (see FIG. 36) of the plate 3.

As in the example illustrated in FIG. 32, the shape of the inner circumferential edge of the outer frame 16 may be substantially similar to the shape of the outer circumferential edge of the plate 3. The size of the inner circumferential edge of the outer frame 16 may be larger than the size of the outer circumferential edge of the plate 3.

In the examples illustrated in FIGs. 32 to 35, the attachment position of the first attachment 21 with respect to the plate 3 is changed by the movement of the workpiece transfer hand 1B relative to the first attachment 21 (see FIG. 35) supported by the attachment supporter 15. In the examples illustrated in FIGs. 32 to 35, there is no need to manually change the attachment position of the first attachment 21. Thus, the operator is free of an increase in workload.

### (Plate 3)

The plate 3 is, for example, a ferromagnetic material that attracts the first electromagnet 211a when energized. The plate 3 is mainly composed of, for example, iron.

As in the example illustrated in FIG. 36, the plate 3 has the attachment mounting surface 31a to which the plurality of attachments 2 are attached. In the example illustrated in FIG. 36, the plate 3 has the first main surface 31. The first main surface 31 is the surface of the plate 3 directed in the first direction DR1. In the example illustrated in FIG. 36, the first main surface 31 includes the attachment mounting surface 31a.

In the example illustrated in FIG. 36, the fixed attraction portion 510 is arranged on the central axis C of the attachment mounting surface 31a (or on the central axis C of the first main surface 31). Thus, no attachment 2 can be attached on this central axis C. In the example illustrated in FIG. 36, the attachable region RG1 where any of the plurality of attachments can be attached in the attachment mounting surface 31a is separated from this central axis C by a predetermined distance. Since the plurality of bolts BT2 for fixing the plate 3 to the plate supporter 4 are arranged in the central region RG2 of the first main surface 31 of the plate 3, no attachment 2 can be attached to this central region RG2. Alternatively, when the thickness of the plate 3 is larger than the thickness of the heads of the bolts BT2, the heads of the bolts BT2 may be inserted in recessed portions of the plate 3. In this case, the attachment 2 can be attached to the central region RG2 of the first main surface 31 of the plate 3.

In the example illustrated in FIG. 36, the above-described attachable region RG1 is continuously present 360 degrees around the central axis C of the attachment mounting surface 31a (or around the central axis C of the first main surface 31). In this case, the attachment 2 can be arranged with a high degree of freedom, compared with a case where the attachable region RG1 is sporadically present around the central axis C of the attachment mounting surface 31a.

In the example illustrated in FIG. 36, the plate 3 has the flat surface 311a to which the plurality of attachments 2 are attached. To this flat surface 311a, the plurality of attachments 2 are attachable in a non-engaging manner.

The width L6 of the plate 3 is, for example, 30 cm or more and 150 cm or less, or is 50 cm or more and 100 cm or less. A length L7 of the plate 3 is, for example, 60 cm or more and 300 cm or less, or is 100 cm or more and 200 cm or less.

As in the example illustrated in FIG. 23, the plate 3 may include a reinforcement component 35. More specifically, the reinforcement component 35 reinforcing the plate 3 may be attached to the back surface 33 of the plate 3. The reinforcement component 35 suppresses the deflection of the plate 3. In the example illustrated in FIG. 23, the reinforcement component 35 is arranged to surround the plate supporter 4, as viewed in a direction orthogonal to the main surface of the plate 3.

### (Plate Supporter 4)

In the example illustrated in FIG. 23, the plate supporter 4 is attached to the central region of the back surface 33 of the plate 3. In the example illustrated in FIG. 23, the plate supporter 4 extends in a direction orthogonal to the plate 3. In the example illustrated in FIG. 23, the plate supporter 4 has a substantially columnar shape.

The plate supporter 4 may include an attachment plate 42 arranged along the back surface 33 of the plate 3. The attachment plate 42 is attached to the plate 3 using the plurality of bolts BT2 (see FIG. 36). The attachment plate 42 may support the above-described first puller 421. FIG. 23 illustrates a state where the above-described fourth puller 424 is attached to the attachment plate 42.

In the example illustrated in FIG. 23, the plate supporter 4 includes the attachment portion 41 attached to the hand traveling device 11 (more specifically, a multi-joint robot 11a).

### (Workpiece transfer device 10B)

As in the example illustrated in FIG. 23, the hand traveling device 11 may include the multi-joint robot 11a. In the example illustrated in FIG. 23, the workpiece transfer hand 1B is attached to a leading end arm 115a of the multi-joint robot 11a.

In the example illustrated in FIG. 23, the multi-joint robot 11a includes a plurality of arms AM, a plurality of joints JT, and a plurality of arm drivers that move the plurality of joints JT (for example, a plurality of motors MT that move the plurality of joints JT). The multi-joint robot 11a has, for example, at least six rotation axes.

As in the example illustrated in FIG. 32, the hand traveling device 11 may include a robot traveling device 11b that moves the multi-joint robot 11a entirely. The robot traveling device 11b moves the multi-joint robot 11a in a direction parallel to the horizontal plane. In the example illustrated in FIG. 32, the robot traveling device 11b moves the multi-joint robot 11a in a direction along the X axis, which is parallel to the horizontal plane.

### (First Platform 12)

In the example illustrated in FIG. 32, the workpiece transfer device 10B includes a first platform 12 capable of supporting a plurality of workpieces including the first workpiece W1 and the second workpiece W2. The first platform 12 may include a first pallet PT1 on which the plurality of workpieces including the first workpiece W1 and the second workpiece W2 can be placed, and a first support stand 121 that supports the plurality of workpieces via the first pallet PT1.

The first support stand 121 may include a pallet mover 121b that moves a pallet (for example, the first pallet PT1). In the example illustrated in FIG. 32, the pallet mover 121b moves the first pallet PT1 in a direction parallel to the horizontal plane. In the example illustrated in FIG. 32, the pallet mover 121b moves the first pallet PT1 in a direction along the X axis, which is parallel to the horizontal plane.

In the example illustrated in FIG. 32, the hand traveling device 11 (more specifically, the multi-joint robot 11a and the robot traveling device 11b) can move the workpiece transfer hand 1B (more specifically, the plate 3) between a position to face the first platform 12 and a position to face the attachment supporter 15.

In the example illustrated in FIG. 32, the hand traveling device 11 (more specifically, the multi-joint robot 11a and the robot traveling device 11b) can move the workpiece transfer hand 1B (more specifically, the plate 3) between a position to face the first platform 12 and a position to face the second platform 13a.

In the example illustrated in FIG. 32, the hand traveling device 11 (more specifically, the multi-joint robot 11a and the robot traveling device 11b) can move the workpiece transfer hand 1B (more specifically, the plate 3) between the position to face the first platform 12 and a position to face the third platform 13b.

### (Second Platform 13a and Third Platform 13b)

As in the example illustrated in FIG. 32, the workpiece transfer device 10B may include the second platform 13a for receiving the workpiece W (for example, the first workpiece W1) conveyed by the workpiece transfer hand 1B. The second platform 13a may include the second pallet PT2 on which the workpiece W (for example, the first workpiece W1) can be placed, and the second support stand 131a that supports the workpiece W (for example, the first workpiece W1) via the second pallet PT2.

In the example illustrated in FIG. 32, the workpiece transfer device 10B can convey the workpiece W (for example, the first workpiece W1) from the first platform 12 to the second platform 13a.

The workpiece transfer device 10B may include the third platform 13b for receiving the workpiece W conveyed by the workpiece transfer hand 1B. The third platform 13b may include the third pallet PT3 on which the workpiece W can be placed, and the third support stand 131b that supports the workpiece W via the third pallet PT3.

In the example illustrated in FIG. 32, the workpiece transfer device 10B can convey the workpiece W from the first platform 12 to the third platform 13b.

The workpiece transfer device 10B may include a fourth platform 13c for receiving the workpiece W conveyed by the workpiece transfer hand 1B.

### (Workpiece W)

The workpiece W (for example, the first workpiece W1) is, for example, the plate workpiece Wa. More specifically, the plurality of attachments 2 disposed on plate 3 in the first layout LA1 can attract the plate workpiece Wa. Since the workpiece W has already been described in embodiment 1, the redundant description on the workpiece W will be omitted.

As in the example illustrated in FIG. 37, the workpiece W (for example, the first workpiece W1) may be a plate workpiece including a plurality of subparts PD connected to each other via fragile regions J. In other words, the workpiece W (for example, the first workpiece W1) may be dividable into the plurality of subparts PD. In the example illustrated in FIG. 37, a plurality of slits SL are formed in the workpiece W (for example, the first workpiece W1). The second electromagnet 211b (see FIG. 19) of the first attachment 21 can favorably attract the workpiece W (for example, the first workpiece W1) regardless of whether the slits SL are provided.

### (Second Workpiece W2)

The second workpiece W2 is, for example, the second plate workpiece Wb. The plurality of attachments 2 disposed on plate 3 in the second layout LA2 can attract the second plate workpiece Wb. Since the second workpiece W2 has already been described in embodiment 1, the redundant description on the second workpiece W2 will be omitted.

The second workpiece W2 may be a plate workpiece in which a plurality of subparts are connected via fragile regions. In other words, the second workpiece W2 may be dividable into the plurality of subparts.

### (Third Workpiece W3)

In the example illustrated in FIG. 22, the plurality of attachments 2 are reattachable to the plate 3 in a third layout LA3 different from the first layout LA1 and the second layout LA2. The plurality of attachments 2 arranged on the plate 3 in the third layout LA3 can attract a third workpiece W3 (see FIG. 32). In the example illustrated in FIG. 32, the third workpiece W3 is a third plate workpiece Wc

The third workpiece W3 (more specifically, the third plate workpiece Wc) is composed of, for example, a ferromagnetic material that is attracted by an electromagnet. The third workpiece W3 (more specifically, the third plate workpiece Wc) is mainly composed of, for example, iron.

### (Power supply unit 6)

As in the example illustrated in FIG. 38, when the first attachment 21 includes the above-described first electromagnet 211a and/or the above-described second electromagnet 211b, the workpiece transfer device 10B includes a power supply unit 6 that supplies current to the above-described first electromagnet 211a and/or the above-described second electromagnet 211b. Alternatively, when the first attachment 21 includes a vacuum suction unit, the workpiece transfer device 10B includes a vacuum pump that sucks air from the vacuum suction unit of the first attachment 21.

In the example illustrated in FIG. 38, the power supply unit 6 can supply current to the first attachment 21 (more specifically, the first electromagnet 211a and/or the second electromagnet 211b). The power supply unit 6 can supply current to the second attachment 22 (more specifically, the third electromagnet 221a and/or the fourth electromagnet 221b).

The power supply unit 6 may be capable of supplying current to the third attachment 23 (more specifically, the fifth electromagnet 231a and/or the sixth electromagnet 231b). The power supply unit 6 may be capable of supplying current to the fourth attachment 24 (more specifically, the seventh electromagnet 241a and/or the eighth electromagnet 241b).

The power supply unit 6 may be capable of supplying current to the fifth attachment 25 (more specifically, the ninth electromagnet 251a and/or the tenth electromagnet 251b). The power supply unit 6 may be capable of supplying current to the sixth attachment 26 (more specifically, the eleventh electromagnet 261a and/or the twelfth electromagnet 261b).

The power supply unit 6 may be capable of supplying current to the seventh attachment 27 (more specifically, the thirteenth electromagnet 271a and/or the fourteenth electromagnet 271b). The power supply unit 6 may be capable of supplying current to the eighth attachment 28 (more specifically, the fifteenth electromagnet 281a and/or the sixteenth electromagnet 281b).

The power supply unit 6 may be capable of supplying current to the electromagnet 510a (in other words, the fixed electromagnet) of the fixed attraction portion 510. Alternatively or additionally, the power supply unit 6 may be capable of supplying current to the electromagnet 530a (in other words, the movable electromagnet) of the movable attraction portion 530.

### (Controller 7)

In the example illustrated in FIG. 38, the workpiece transfer device 10B includes the controller 7 that controls the hand traveling device 11. The controller 7 also controls the attracting operation of each of the plurality of attachments 2. More specifically, the controller 7 controls the power supply unit 6, thereby controlling the attracting operation of each of the plurality of attachments 2.

For example, the controller 7 can control the power supply unit 6 to supply current to the first electromagnet 211a of the first attachment 21. When current is supplied to the first electromagnet 211a, the first electromagnet 211a is excited. When the first electromagnet 211a is excited, the first electromagnet 211a of the first attachment 21 is attracted to the plate 3. The controller 7 can also control the power supply unit 6 to stop the supply of current to the first electromagnet 211a of the first attachment 21. When the supply of current to the first electromagnet 211a is stopped, the first electromagnet 211a is demagnetized. When the first electromagnet 211a is demagnetized, the first attachment 21 is released from the plate 3.

For example, the controller 7 can control the power supply unit 6 to supply current to the second electromagnet 211b of the first attachment 21. When current is supplied to the second electromagnet 211b, the second electromagnet 211b is excited. When the second electromagnet 211b is excited, the second electromagnet 211b of the first attachment 21 attracts the workpiece W. The controller 7 can also control the power supply unit 6 to stop the supply of current to the second electromagnet 211b of the first attachment 21. When the supply of current to the second electromagnet 211b is stopped, the second electromagnet 211b is demagnetized. When the second electromagnet 211b is demagnetized, the workpiece W is released from the first attachment 21.

For example, the controller 7 can control the power supply unit 6 to supply current to the third electromagnet 221a of the second attachment 22. When current is supplied to the third electromagnet 221a, the third electromagnet 221a is excited. When the third electromagnet 221a is excited, the third electromagnet 221a of the second attachment 22 is attracted to the plate 3. The controller 7 can also control the power supply unit 6 to stop the supply of current to the third electromagnet 221a of the second attachment 22. When the supply of current to the third electromagnet 221a is stopped, the third electromagnet 221a is demagnetized. When the third electromagnet 221a is demagnetized, the second attachment 22 is released from the plate 3.

For example, the controller 7 can control the power supply unit 6 to supply current to the fourth electromagnet 221b of the second attachment 22. When current is supplied to the fourth electromagnet 221b, the fourth electromagnet 221b is excited. When the fourth electromagnet 221b is excited, the fourth electromagnet 221b of the second attachment 22 attracts the workpiece W. The controller 7 can also control the power supply unit 6 to stop the supply of current to the fourth electromagnet 221b of the second attachment 22. When the supply of current to the fourth electromagnet 221b is stopped, the fourth electromagnet 221b is demagnetized. When the fourth electromagnet 221b is demagnetized, the workpiece W is released from the second attachment 22.

Additionally, the controller 7 may control the attachment supporter 15.

A single computer may function as the controller 7, or multiple computers may cooperate to function as the controller 7. For example, the controller 7 may include a lower-level computer that controls the plurality of attachments 2 and the hand traveling device 11, and an upper-level computer that sends commands or data to the lower-level computer.

In the example illustrated in FIG. 38, the controller 7 includes a hardware processor 70 (hereinafter, simply referred to as the "processor 70"), a memory 72, a communication circuit 74, an inputter 76, and a display 77. The processor 70, the memory 72, the communication circuit 74, the inputter 76, and the display 77 are connected to each other via a bus 78. In the example illustrated in FIG. 38, the inputter 76 includes a touch panel 76t on the display 77. In other words, the display 77 is a display with the touch panel 76t. The inputter 76 may include buttons, switches, levers, a pointing device and/or a keyboard.

The memory 72 is a storage medium readable by the processor 70 of the controller 7. The memory 72 may be, for example, a non-volatile or volatile semiconductor memory such as RAM, ROM, and a flash memory, a magnetic disk, or a memory of another form.

The memory 72 stores data DT and a program PM. By the processor 70 of the controller 7 executing the program PM stored in the memory 72, the controller 7 generates a control instruction. The communication circuit 74 transmits this control instruction to control target devices (more specifically, the hand traveling device 11, the power supply unit 6, the attachment supporter 15, and the like). Thus, by the processor 70 executing the program PM, the controller 7 can control the control target devices (more specifically, the hand traveling device 11, the power supply unit 6, the attachment supporter 15, and the like).

### (First Position Change Mode M1-1)

As in the example illustrated in FIG. 3 or FIG. 39, the controller 7 can execute a first position change mode M1-1 by controlling the hand traveling device 11 and the attachment supporter 15. The first position change mode M1-1 is a mode under which the attachment position of the first attachment 21 with respect to the plate 3 is changed with the second attachment 22 attached to the plate 3. In the example illustrated in FIG. 39, the first position change mode M1-1 includes changing the attachment position of the first attachment 21 with respect to the plate 3 from a first attachment position T1 to a second attachment position T2.

As in the example illustrated in FIG. 39, the first position change mode M1-1 may be executed with the third attachment 23 attached to the plate 3. As in the example illustrated in FIG. 39, the first position change mode M1-1 may be executed with the fourth attachment 24 attached to the plate 3.

The first position change mode M1-1 may include transmitting a first movement command from the controller 7 to the hand traveling device 11 to move the first attachment 21 to a position to face the attachment supporter 15 (more specifically, the first supporter 15a).

The first position change mode M1-1 may include transmitting a first raising command from the controller 7 to the lifting device 157 (more specifically, the first lifting device 157a) to move the gripping component 151 (more specifically, the first gripping component 151a) from a lowered position to a raised position. Note that if the gripping component 151 cannot be raised, the transmission of the first raising command is omitted.

The first position change mode M1-1 may include transmitting a first gripping command from the controller 7 to the gripping component mover 153 (more specifically, the first driver 153a) to grip the first attachment 21 with the gripping component 151 (more specifically, the first gripping component 151a). The first position change mode M1-1 may also include transmitting a first demagnetization command from the controller 7 to the power supply unit 6 to demagnetize the first electromagnet 211a after the first attachment 21 is gripped with the gripping component 151 (more specifically, the first gripping component 151a).

The first position change mode M1-1 may include transmitting a second movement command from the controller 7 to the hand traveling device 11 to move the second attachment position T2 on the plate 3 to a position to face the first attachment 21.

The first position change mode M1-1 may include transmitting a first excitation command from the controller 7 to the power supply unit 6 to excite the first electromagnet 211a after the second attachment position T2 on the plate 3 is moved to the position to face the first attachment 21. The first position change mode M1-1 may include transmitting a first gripping release command from the controller 7 to the gripping component mover 153 (more specifically, the first driver 153a) to release the gripping of the first attachment 21 with the gripping component 151 (more specifically, the first gripping component 151a) after the second attachment position T2 on the plate 3 is moved to the position to face the first attachment 21.

The first position change mode M1-1 may include transmitting a first lowering command from the controller 7 to the lifting device 157 (more specifically, the first lifting device 157a) to move the gripping component 151 (more specifically, the first gripping component 151a) from the raised position to the lowered position after the first attachment 21 is attached to the second attachment position T2 on the plate 3. When the gripping component 151 cannot be lowered, the transmission of the first lowering command is omitted.

### (Second Position Change Mode M1-2)

As in the example illustrated in FIG. 5 or FIG. 40, the controller 7 can execute a second position change mode M1-2 by controlling the hand traveling device 11 and the attachment supporter 15. The second position change mode M1-2 is a mode under which the attachment position of the second attachment 22 with respect to the plate 3 is changed with the first attachment 21 attached to the plate 3. In the example illustrated in FIG. 40, the second position change mode M1-2 includes changing the attachment position of the second attachment 22 with respect to the plate 3 from a third attachment position T3 to a fourth attachment position T4.

As in the example illustrated in FIG. 40, the second position change mode M1-2 may be executed with the third attachment 23 attached to the plate 3. As in the example illustrated in FIG. 40, the second position change mode M1-2 may be executed with the fourth attachment 24 attached to the plate 3.

The second position change mode M1-2 may include transmitting a third movement command from the controller 7 to the hand traveling device 11 to move the second attachment 22 to a position to face the attachment supporter 15 (more specifically, the second supporter 15b).

The second position change mode M1-2 may include transmitting a second raising command from the controller 7 to the lifting device 157 (more specifically, the second lifting device 157b) to move the gripping component 151 (more specifically, the second gripping component 151b) from a lowered position to a raised position. When the gripping component 151 cannot be raised, the transmission of the second raising command is omitted.

The second position change mode M1-2 may include transmitting a second gripping command from the controller 7 to the gripping component mover 153 (more specifically, the second driver 153b) to grip the second attachment 22 with the gripping component 151 (more specifically, the second gripping component 151b). The second position change mode M1-2 may also include transmitting a second demagnetization command from the controller 7 to the power supply unit 6 to demagnetize the third electromagnet 221a after the second attachment 22 is gripped with the gripping component 151 (more specifically, the second gripping component 151b).

The second position change mode M1-2 may include transmitting a fourth movement command from the controller 7 to the hand traveling device 11 to move the fourth attachment position T4 on the plate 3 to a position to face the second attachment 22.

The second position change mode M1-2 may include transmitting a second excitation command from the controller 7 to the power supply unit 6 to excite the third electromagnet 221a after the fourth attachment position T4 on the plate 3 is moved to the position to face the second attachment 22. The second position change mode M1-2 may include transmitting a second gripping release command from the controller 7 to the gripping component mover 153 (more specifically, the second driver 153b) to release the gripping of the second attachment 22 with the gripping component 151 (more specifically, the second gripping component 151b) after the fourth attachment position T4 on the plate 3 is moved to the position to face the second attachment 22.

The second position change mode M1-2 may include transmitting a second lowering command from the controller 7 to the lifting device 157 (more specifically, the second lifting device 157b) to move the gripping component 151 (more specifically, the second gripping component 151b) from the raised position to the lowered position after the second attachment 22 is attached to the fourth attachment position T4 on the plate 3. When the gripping component 151 cannot be lowered, the transmission of the second lowering command is omitted.

### (Third Position Change Mode M1-3)

As in the example illustrated in FIG. 6, the controller 7 may be capable of executing a third position change mode M1-3 under which the attachment position of the third attachment 23 with respect to the plate 3 is changed with the first attachment 21 and the second attachment 22 attached to the plate 3.

### (Layout Change Mode M1)

As in the examples illustrated in FIGs. 2 to 7 (or as in the examples illustrated in FIGs. 39 and 40), the controller 7 can execute a layout change mode M1 under which the hand traveling device 11 and the attachment supporter 15 are used to change the layout of the plurality of attachments 2 from the first layout LA1 to the second layout LA2.

The layout change mode M1 includes the above-described first position change mode M1-1 and the above-described second position change mode M1-2. The layout change mode M1 may also include the above-described third position change mode M1-3.

In this specification, "N" is defined as the number of attachments 2 required to have the attachment position to the plate 3 changed when the layout of the plurality of attachments 2 attached to the plate 3 is changed from the first layout LA1 to the second layout LA2.

The layout change mode M1 may include transmitting a control command from the controller 7 to the hand traveling device 11, the power supply unit 6, and the attachment supporter 15 to change the positions of the plurality of attachments 2 attached to the plate 3 in order.

More specifically, when "K" is defined as any natural number smaller than "N", the layout change mode M1 may include transmitting a control command from the controller 7 to the hand traveling device 11, the power supply unit 6, and the attachment supporter 15 to change the attachment position of the "K+1"-th attachment 2 to the plate 3 after the attachment position of the "K"-th attachment 2 to the plate 3 is changed.

The attachment position of the "K"-th attachment 2 to the plate 3 is changed by detaching the "K"-th attachment 2 from the plate 3 and reattaching the "K"-th attachment 2 to the plate 3. The attachment position of the "K+1"-th attachment 2 to the plate 3 is changed by detaching the "K+1"-th attachment 2 from the plate 3 and reattaching the "K+1"-th attachment 2 to the plate 3.

The layout change mode M1 may include changing the layout of the plurality of attachments 2 with respect to the plate 3 from the first layout LA1 conforming to the shape of the first workpiece W1 to the second layout LA2 conforming to the shape of the second workpiece W2, based on computer-aided design (CAD) data including shape data of the first workpiece W1 and shape data of the second workpiece W2.

Alternatively, layout change mode M1 may include changing the layout of the plurality of attachments 2 with respect to the plate 3 from the first layout LA1 conforming to the shape of the first workpiece W1 to the second layout LA2 conforming to the shape of the second workpiece W2, based on an instruction from a user. For example, when the user designates a reattachment position for the plurality of attachments 2 on the display 77 of the controller 7, the layout of the plurality of attachments 2 with respect to the plate 3 may be changed from the first layout LA1 conforming to the shape of the first workpiece W1 to the second layout LA2 conforming to the shape of second workpiece W2.

### (Second Layout Change Mode M2)

As in the examples illustrated in FIGs. 21 and 22, the controller 7 can execute a second layout change mode M2 under which the hand traveling device 11 and the attachment supporter 15 are used to change the layout of the plurality of attachments 2 from the second layout LA2 to the third layout LA3.

### (Sorting Mode M3)

The controller 7 may be capable of executing a sorting mode M3 under which a plurality of workpieces W are sorted into a plurality of groups by controlling the hand traveling device 11, the attachment supporter 15, and the attracting operation of each of the plurality of attachments 2.

FIG. 41 schematically illustrates how the plurality of workpieces W are sorted into a plurality of groups. Under the sorting mode M3, the plurality of workpieces W may be sorted into a plurality of groups based on the type of post processing. For example, under the sorting mode M3, the plurality of workpieces W may be sorted into a group that requires welding and a group that does not require welding. Alternatively or additionally, under the sorting mode M3, the plurality of workpieces W may be sorted into a group that requires bending and a group that does not require bending.

Alternatively or additionally, under the sorting mode M3, the plurality of workpieces W may be sorted into a group of a smaller size and a group of a larger size.

In the example illustrated in FIG. 41, the first workpiece W1 is classified as the first group. The first workpiece W1 classified as the first group is conveyed from the first platform 12 to one side portion 1311a of the second platform 13a. In the example illustrated in FIG. 41, the second workpiece W2 and a third workpiece W3 are classified as the second group. The second workpiece W2 and the third workpiece W3 classified as the second group are conveyed from the first platform 12 to another side portion 1312a of the second platform 13a.

In the example illustrated in FIG. 41, the first workpiece W1, the second workpiece W2, and the third workpiece W3 are classified as a third group. The first workpiece W1, the second workpiece W2, and the third workpiece W3 classified as the third group are conveyed from the first platform 12 to the second platform 13a. In the example illustrated in FIG. 41, a fourth workpiece W4 and a fifth workpiece W5 are classified as a fourth group. The fourth workpiece W4 and the fifth workpiece W5 classified as the fourth group are conveyed from the first platform 12 to the third platform 13b.

The sorting mode M3 may include conveying at least one workpiece (for example, the first workpiece W1), out of the plurality of workpieces W, that is classified as the first group from the first platform 12 to the one side portion 1311a of the second platform 13a (for example, one side portion of the second pallet PT2) using the hand traveling device 11. The sorting mode M3 may also include conveying at least one workpiece (for example, the second workpiece W2, the third workpiece W3), out of the plurality of workpieces W, that is classified as the second group from the first platform 12 to the other side portion 1312a of the second platform 13a (for example, the other side portion of the second pallet PT2) using the hand traveling device 11.

The sorting mode M3 may include conveying at least one workpiece (for example, the first workpiece W1, the second workpiece W2, the third workpiece W3), out of the plurality of workpieces W, that is classified as the third group from the first platform 12 to the second platform 13a (for example, the second pallet PT2) using the hand traveling device 11. The sorting mode M3 may also include conveying at least one workpiece (for example, the fourth workpiece W4, the fifth workpiece W5), out of the plurality of workpieces W, that is classified as the fourth group of W from the first platform 12 to the third platform 13b (for example, the third pallet PT3) using the hand traveling device 11.

In the example illustrated in FIG. 41, the first platform 12 supports a plurality of workpieces including the first workpiece W1 classified as the first group and the second workpiece W2 classified as the second group.

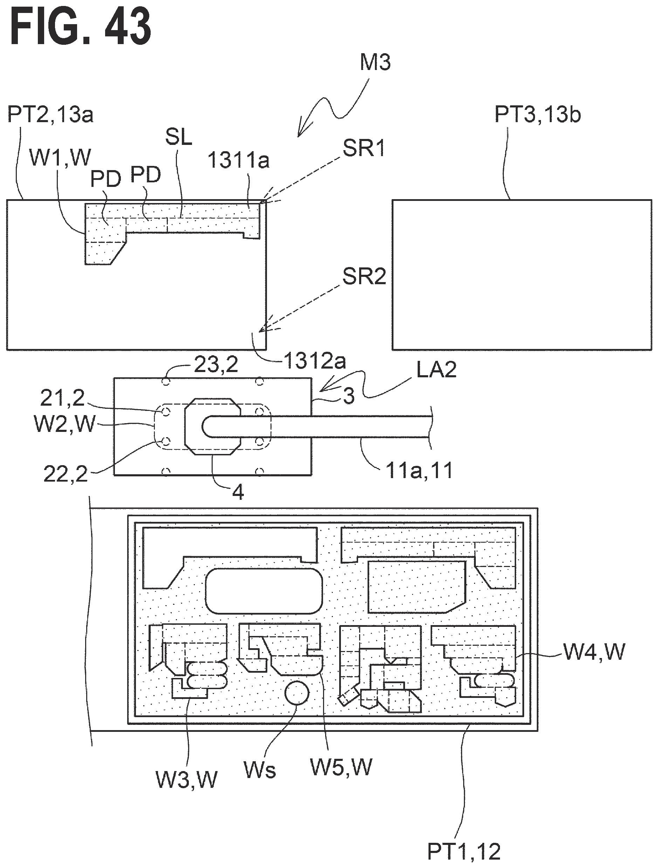

In the example illustrated in FIG. 42, the sorting mode M3 includes conveying the first workpiece W1 from the first platform 12 to a first sorting region SR1 using the hand traveling device 11, with the first workpiece W1 attracted by the plurality of attachments 2 attached to the plate 3 in the first layout LA1. In the example illustrated in FIG. 43, the first sorting region SR1 is a region on the second platform 13a (more specifically, the one side portion 1311a of the second platform 13a). The first workpiece W1 may be conveyed with the first workpiece W1 attracted by the plurality of attachments 2 and the fixed attraction portion 510 (see FIG. 19).

In the examples illustrated in FIGs. 39 and 40, the sorting mode M3 includes changing the layout of the plurality of attachments 2 from the first layout LA1 to the second layout LA2 using the hand traveling device 11 and the attachment supporter 15. More specifically, the sorting mode M3 includes a plurality of position change modes including the first position change mode M1-1 and the second position change mode M1-2. The first position change mode M1-1 and the second position change mode M1-2 have already been described, and the redundant description on the first position change mode M1-1 and the second position change mode M1-2 will be omitted.

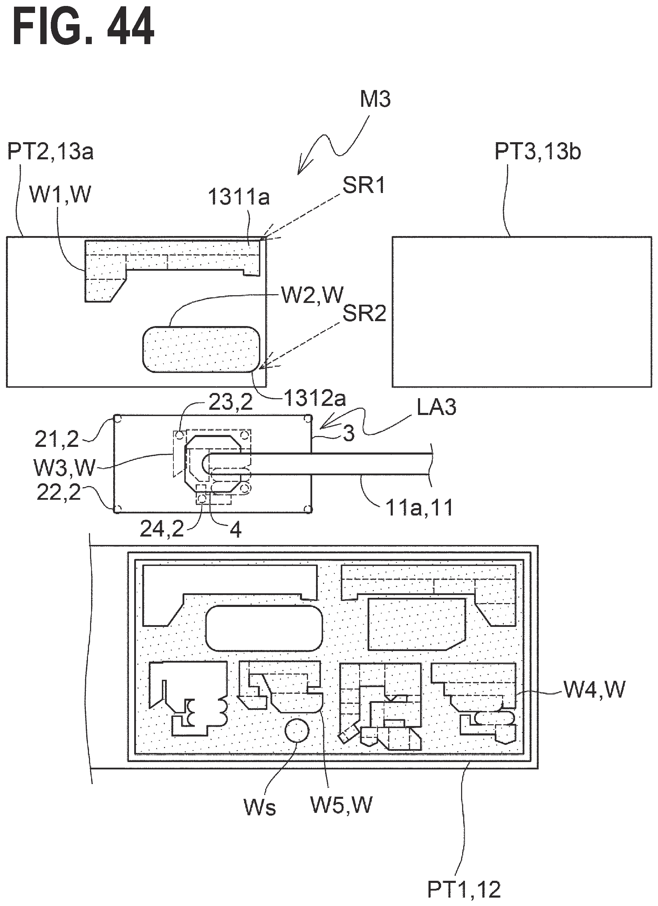

In the example illustrated in FIG. 43, the sorting mode M3 includes conveying the second workpiece W2 from the first platform 12 to a second sorting region SR2 using the hand traveling device 11, with the second workpiece W2 attracted by the plurality of attachments 2 attached to the plate 3 in the second layout LA2. In the example illustrated in FIG. 44, the second sorting region SR2 is the other side portion 1312a of the second platform 13a. Alternatively, the second sorting region SR2 may be a region on the third platform 13b. The second workpiece W2 may be conveyed with the second workpiece W2 attracted by the plurality of attachments 2 and the fixed attraction portion 510 (see FIG. 21).

The sorting mode M3 may include changing the layout of the plurality of attachments 2 from the second layout LA2 (see FIG. 21) to the third layout LA3 (see FIG. 22) using the hand traveling device 11 and the attachment supporter 15.

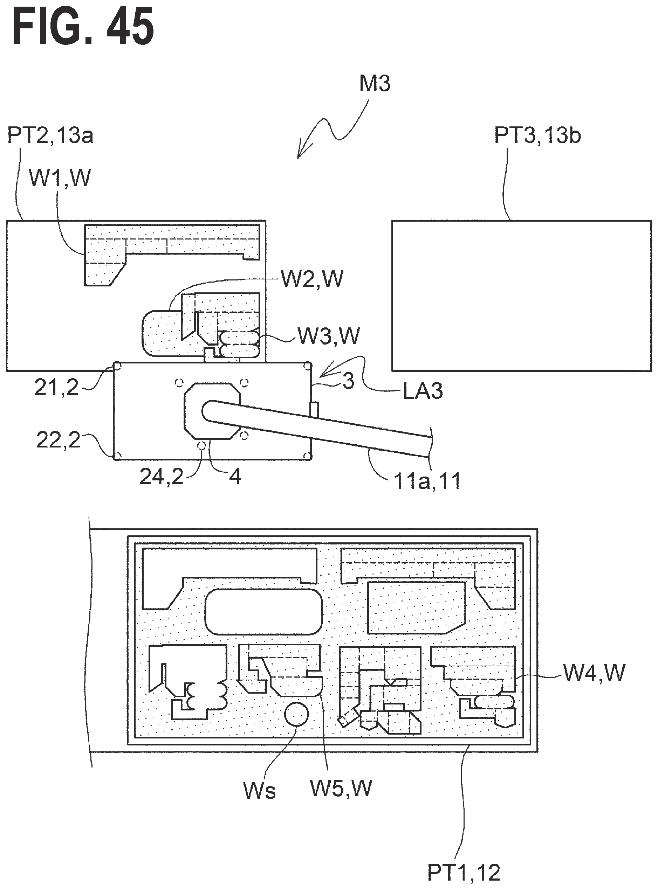

In the examples illustrated in FIGs. 44 and 45, the sorting mode M3 includes conveying the third workpiece W3 onto the first workpiece W1 or onto the second workpiece W2 using the hand traveling device 11, with the third workpiece W3 attracted by the plurality of attachments 2 attached to the plate 3 in the third layout LA3. With the third workpiece W3 stacked on top of the first workpiece W1 or the second workpiece W2, the area occupied by the plurality of workpieces W can be made small. The conveyance of the third workpiece W3 may be performed with the third workpiece W3 attracted by the plurality of attachments 2 and the fixed attraction portion 510 (see FIG. 22).

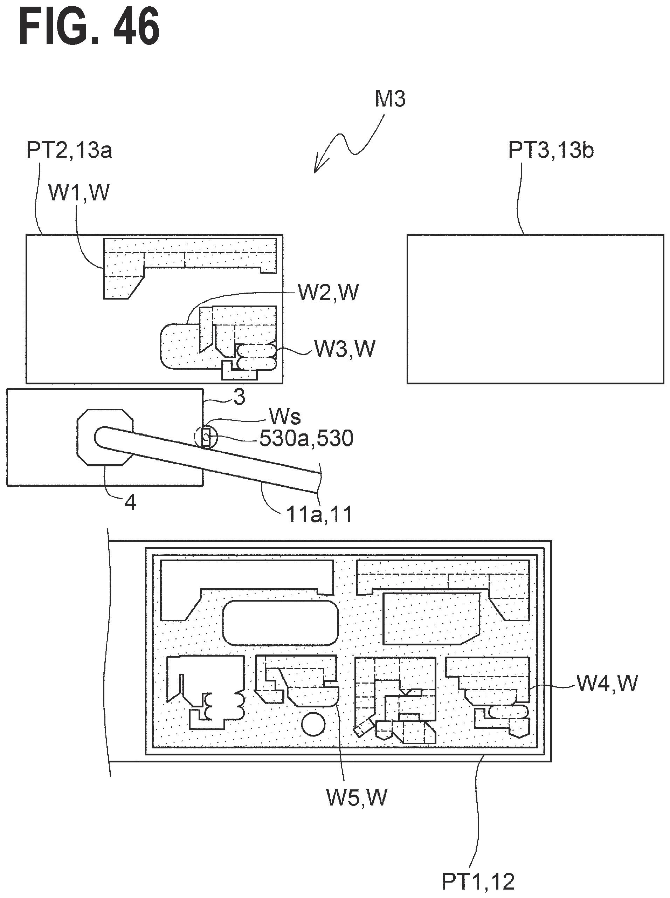

As in the example illustrated in FIG. 46, the sorting mode M3 may include conveying the small workpiece Ws onto the first workpiece W1 or onto the second workpiece W2 using the hand traveling device 11, with the small workpiece Ws attracted by the movable attraction portion 530 (more specifically, the electromagnet 530a of the movable attraction portion 530).

### (Embodiment 3)

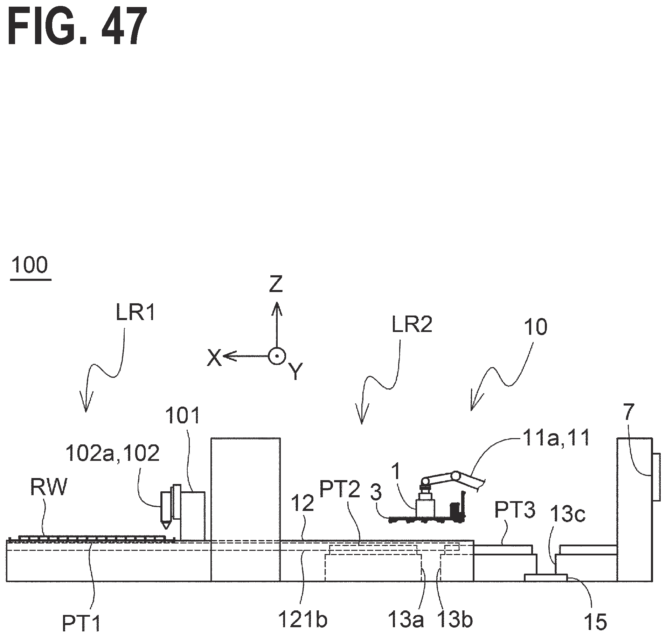

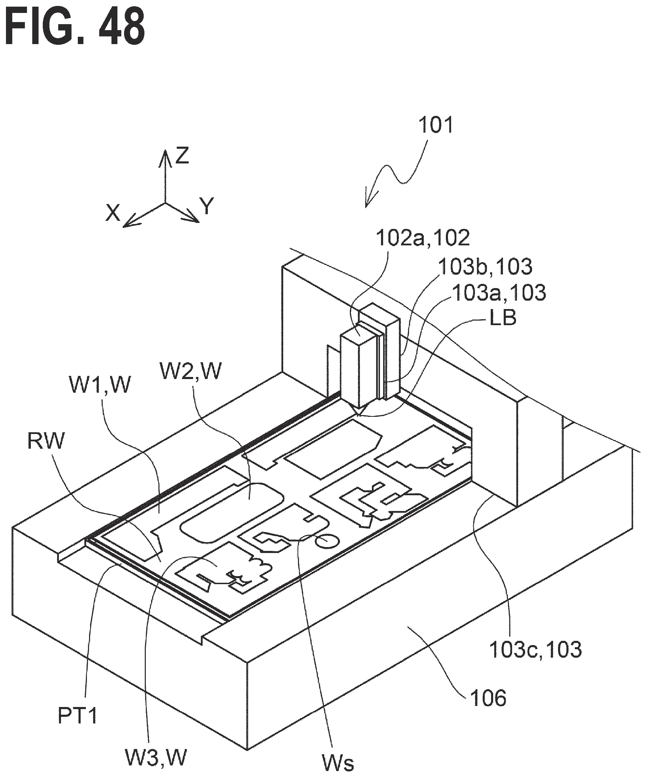

With reference to FIGs. 1 to 48, the laser beam machining system 100 according to embodiment 3 will be described. FIG. 47 is a schematic side view schematically illustrating the laser beam machining system 100 according to embodiment 3. FIG. 48 is a schematic perspective view illustrating a part of the laser beam machining system 100 according to embodiment 3.

In embodiment 3, differences from embodiment 1 and embodiment 2 will be mainly described. In embodiment 3, redundant description on what have been described in embodiment 1 or embodiment 2 will be omitted. Thus, it is a matter of course that what have been described in embodiment 1 or embodiment 2, which are not explicitly described in embodiment 3, can be applied to embodiment 3.

As in the example illustrated in FIG. 47, the laser beam machining system 100 according to embodiment 3 includes a laser beam machining apparatus 101 and the workpiece transfer device 10.

As in the example illustrated in FIG. 48, the laser beam machining apparatus 101 forms the plurality of workpieces W including the first workpiece W1 and the second workpiece W2 from a raw material workpiece RW by irradiating the raw material workpiece RW with a laser beam LB.

As in the example illustrated in FIG. 47, the workpiece transfer device 10 includes the workpiece transfer hand 1 and the hand traveling device 11 that moves the workpiece transfer hand 1. The workpiece transfer device 10 conveys the plurality of workpieces W. As in the example illustrated in FIG. 1 or FIG. 20, the workpiece transfer hand 1 includes the plurality of attachments 2 including the first attachment 21 capable of attracting the first workpiece W1 and the second attachment 22 capable of attracting the first workpiece W1, and the plate 3 to which the plurality of attachments 2 are attached.

The workpiece transfer device 10 may be the workpiece transfer device 10A according to embodiment 1, the workpiece transfer device 10B according to embodiment 2, or other workpiece transfer devices. The workpiece transfer hand 1 may be the workpiece transfer hand 1A according to embodiment 1, the workpiece transfer hand 1B according to embodiment 2, or other workpiece transfer hands. The workpiece transfer hand 1A according to embodiment 1, the workpiece transfer device 10A according to embodiment 1, the workpiece transfer hand 1B according to embodiment 2, and the workpiece transfer device 10B according to embodiment 2 are already described, and the redundant description on these will be omitted.

In the workpiece transfer hand 1, each of the plurality of attachments 2 is independently detachable from the plate 3.

As in the example illustrated in FIG. 2 or FIG. 19, the plurality of attachments 2 are attachable to the plate 3 in the first layout LA1. As in the example illustrated in FIG. 7 or FIG. 21, the plurality of attachments 2 are reattachable to the plate 3 in the second layout LA2 different from the first layout LA1.

Thus, the laser beam machining system 100 according to embodiment 3 provides effects equal to the workpiece transfer hand 1A according to embodiment 1, the workpiece transfer device 10A according to embodiment 1, the workpiece transfer hand 1B according to embodiment 2, or the workpiece transfer device 10B according to embodiment 2.

### (Optional Configurations)

Next, with reference to FIGs. 1 to 48, optional configurations that can be adopted in the laser beam machining system 100 according to embodiment 3 will be described.

### (Laser beam machining Apparatus 101)

In the example illustrated in FIG. 48, the laser beam machining apparatus 101 includes a laser irradiator 102 including a laser head 102a, a head mover 103 that moves the laser head 102a, and a work holder 106.

In the example illustrated in FIG. 48, the work holder 106 supports a workpiece (for example, the raw material workpiece RW) via a pallet (for example, the first pallet PT1).

The head mover 103 may include a Z-axis mover 103a that moves the laser head 102a in a direction along the Z axis, which is parallel to the vertical direction. The head mover 103 may include a Y-axis mover 103b that moves the laser head 102a in a direction along the Y axis, which is parallel to in the horizontal plane. The head mover 103 may include an X-axis mover 103c that moves the laser head 102a in a direction along the X axis, which is orthogonal to both the Z axis and the Y axis.

### (Pallet Mover 121b)

As in the example illustrated in FIG. 47, the laser beam machining system 100 may include the pallet mover 121b that moves a pallet (for example, the first pallet PT1) from a first region LR1 where the raw material workpiece RW is processed by the laser beam emitted from the laser head 102a to a second region LR2 accessible by the workpiece transfer hand 1. In the example illustrated in FIG. 47, the pallet mover 121b moves the first pallet PT1 in a direction parallel to the horizontal plane. In the example illustrated in FIG. 32, the pallet mover 121b moves the first pallet PT1 in a direction along the X axis, which is parallel to the horizontal plane.

### (Hand traveling device 11)

As in the example illustrated in FIG. 32, the hand traveling device 11 may include the multi-joint robot 11a. The hand traveling device 11 may also include the robot traveling device 11b, which moves the multi-joint robot 11a. In the example illustrated in FIG. 32, the robot traveling device 11b can move the multi-joint robot 11a in a direction along the X axis, which is parallel to the horizontal plane. Alternatively, as in the example illustrated in FIG. 15, the hand traveling device 11 may include a gate-shaped frame 11m that supports the workpiece transfer hand 1 and a mover (for example, the X-axis mover 113) that moves the gate-shaped frame 11m.

### (Attachment Supporter 15)

The laser beam machining system 100 may include the attachment supporter 15, which supports an attachment, out of the plurality of attachments 2, that has been detached from the plate 3. The attachment supporter 15 has already been described in embodiment 1 or embodiment 2, and the description on the attachment supporter 15 will be omitted.

### (First Platform 12, Second Platform 13a, Third Platform 13b)

The laser beam machining system 100 may include the first platform 12. The laser beam machining system 100 may include the second platform 13a and/or the third platform 13b. The first platform 12, the second platform 13a, and the third platform 13b have already been described in embodiment 1 or embodiment 2, and the description on these platforms will be omitted.

### (Power supply unit 6, Controller 7)

The laser beam machining system 100 may include the power supply unit 6 and/or the controller 7. The power supply unit 6 and the controller 7 have already been described in embodiment 2, and the description on the power supply unit 6 and the controller 7 will be omitted.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

### Description of the Reference Numerals

1, 1A, 1B ... Workpiece transfer hand, 2 ... Attachment, 2f ... End surface, 2m ... Detached attachment, 3 ... Plate, 3e ... Outer circumferential edge, 4 ... Plate supporter, 6 ... Power supply unit, 7 ... Controller, 10, 10A, 10B ... Workpiece transfer device, 11 ... Hand traveling device, 11a ... Multi-joint robot, 11b ... Robot traveling device, 11m ... Gate-shaped frame, 12 ... First platform, 13a ... Second platform, 13b ... Third platform, 13c ... Fourth platform, 15 ... Attachment supporter, 15a ... First supporter, 15b ... Second supporter, 15c ... Third supporter, 15d ... Fourth supporter, 15e ... Fifth supporter, 15f ... Sixth supporter, 15g ... Seventh supporter, 15h ... Eighth supporter, 16 ... Outer frame , 21 ... First attachment, 22 ... Second attachment, 23 ... Third attachment, 24 ... Fourth attachment, 25 ... Fifth attachment, 26 ... Sixth attachment, 27 ... Seventh attachment, 28 ... Eighth attachment, 30e ... Outer circumferential edge portion, 31 ... First main surface, 31a ... Attachment mounting surface, 33 ... Back surface, 35 ... Reinforcement component, 41 ... Attachment portion, 42 ... Attachment plate, 54 ... Guide component, 56 ... Puller, 70 ... Processor, 72 ... Memory, 74 ... Communication circuit, 76 ... Inputter, 76t ... Touch panel, 77 ... Display, 78 ... Bus, 100 ... Laser beam machining system, 101 ... Laser beam machining apparatus, 102 ... Laser irradiator, 102a ... Laser head, 103 ... Head mover, 103a ... Z-axis mover, 103b ... Y-axis mover, 103c ... X-axis mover, 106 ... Work holder, 111 ... Z-axis mover, 112 ... Y-axis mover, 113 ... X-axis mover, 114 ... Rotator, 115a ... Leading end arm, 121 ... First support stand, 121b ... Pallet mover, 131a ... Second support stand, 131b ... Third support stand, 151 ... Gripping component, 151a ... First gripping component, 151b ... Second gripping component, 151c ... Third gripping component, 153 ... Gripping component mover, 153a ... First driver, 153b ... Second driver, 153c ... Third driver, 155 ... Stand, 155a ... First stand, 155b ... Second stand, 155c ... Third stand, 157 ... Lifting device, 157a ... First lifting device, 157b ... Second lifting device, 157c ... Third lifting device, 161 ... First side wall, 162 ... Second side wall, 210a ... First attraction portion, 210b ... Second attraction portion, 211a ... First electromagnet, 211b ... Second electromagnet, 211c ... First insulator, 220a ... Third attraction portion, 220b ... Fourth attraction portion, 221a ... Third electromagnet, 221b ... Fourth electromagnet, 221c ... Second insulator, 230a ... Fifth attraction portion, 230b ... Sixth attraction portion, 231a ... Fifth electromagnet, 231b ... Sixth electromagnet, 240a ... Seventh attraction portion, 240b ... Eighth attraction portion, 241a ... Seventh electromagnet, 241b ... Eighth electromagnet, 250a ... Ninth attraction portion, 250b ... Tenth attraction portion, 251a ... Ninth electromagnet, 251b ... Tenth electromagnet, 260a ... Eleventh attraction portion, 260b ... Twelfth attraction portion, 261a ... Eleventh electromagnet, 261b ... Twelfth electromagnet, 270a ... Thirteenth attraction portion, 270b ... Fourteenth attraction portion, 271a ... Thirteenth electromagnet, 271b ... Fourteenth electromagnet, 280a ... Fifteenth attraction portion, 280b ... Sixteenth attraction portion, 281a ... Fifteenth electromagnet, 281b ... Sixteenth electromagnet, 291 ... Cable, 291a ... First cable, 291b ... Second cable, 291c ... Bundled region, 292 ... Cable, 292a ... Third cable, 292b ... Fourth cable, 292c ... Bundled region, 293 ... Cable, 293a ... Fifth cable, 293b ... Sixth cable, 294a ... Seventh cable, 294b ... Eighth cable, 295a ... Ninth cable, 295b ... Tenth cable, 296a ... Eleventh cable, 296b ... Twelfth cable, 297a ... Thirteenth cable, 297b ... Fourteenth cable, 298a ... Fifteenth cable, 298b ... Sixteenth cable, 311a ... Flat surface, 341h ... First through-hole part, 342h ... Second through-hole part, 421 ... First puller, 422 ... Second puller, 423 ... Third puller, 424 ... Fourth puller, 425 ... Fifth puller, 426 ... Sixth puller, 427 ... Seventh puller, 428 ... Eighth puller, 431 ... First support, 431p ... Movable pulley, 432 ... Second support, 432p ... Movable pulley, 433 ... Third support, 441 ... First mover, 441b ... Ball screw, 441m ... Motor, 442 ... Second mover, 442b ... Ball screw, 442m ... Motor, 443 ... Third mover, 451 ... First guide component, 451r ... First guide rail, 452 ... Second guide component, 452r ... Second guide rail, 510 ... Fixed attraction portion, 510a ... Electromagnet, 511 ... Cable, 530 ... Movable attraction portion, 530a ... Electromagnet, 530f ... End surface, 532 ... Cable, 535 ... Attraction portion mover, 535s ... Fluid pressure cylinder, 551 ... Guide rod, 553 ... Block, 561 ... Support, 561p ... Movable pulley, 562 ... Mover, 562b ... Ball screw, 562m ... Motor, 1311a ... One side portion, 1312a ... Another side portion, 1570a ... Fluid pressure cylinder, AM ... Arm, BT1 ... Bolt, BT2 ... Bolt, C ... Central axis of attachment mounting surface, C1 ... Centroid of attachment mounting surface, C2 ... Central axis of plate supporter, C3 ... Central axis of movable attraction portion, DR1 ... First direction, DR2 ... Second direction, DT ... Data, HC ... Virtual circle , J ... Fragile region, JT ... Joint, LA1 ... First layout, LA2 ... Second layout, LA3 ... Third layout, LB ... Laser beam, LR1 ... First region, LR2 ... Second region, LS1 ... Line segment, LS2 ... Line segment, M1 ... Layout change mode, M1-1 ... First position change mode, M1-2 ... Second position change mode, M1-3 ... Third position change mode, M2 ... Second layout change mode, M3 ... Sorting mode, MT ... Motor, P1 ... First position, P2 ... Second position, P3 ... Third position, P4 ... Fourth position, PD ... Subpart, PM ... Program, PT1 ... First pallet, PT2 ... Second pallet, PT3 ... Third pallet, Q1 ... Open position, Q2 ... Closed position, Q3 ... Lowered position, Q4 ... Raised position, Q5 ... Retracted position, Q6 ... Advanced position, Q7 ... Intermediate position, RG1 ... Attachable region, RG2 ... Central region, RW ... Raw material workpiece, SL ... Slit, SP ... Inner space, SR1 ... First sorting region, SR2 ... Second sorting region, T1 ... First attachment position, T2 ... Second attachment position, T3 ... Third attachment position, T4 ... Fourth attachment position, W ... Workpiece, W1 ... First workpiece, W2 ... Second workpiece, W3 ... Third workpiece, W4 ... Fourth workpiece, W5 ... Fifth workpiece, Wa ... Plate workpiece, Wb ... Plate workpiece, Wc ... Plate workpiece, Wp ... Pipe workpiece, Ws ... Small workpiece

## Claims

1. A workpiece transfer hand comprising:
a plurality of attachments including a first attachment capable of attracting a workpiece, and a second attachment capable of attracting the workpiece; and
a plate to which the plurality of attachments are attached,
wherein the plurality of attachments are attachable to the plate in a first layout,
wherein each of the plurality of attachments is independently detachable from the plate, and
wherein the plurality of attachments are reattachable to the plate in a second layout different from the first layout.

2. The workpiece transfer hand according to claim 1,
wherein the first attachment includes
a first attraction portion configured to attract the plate, and
a second attraction portion configured to attract the workpiece.

3. The workpiece transfer hand according to claim 2,
wherein the first attraction portion is a first electromagnet, and
wherein the second attraction portion is a second electromagnet.

4. The workpiece transfer hand according to any one of claims 1 to 3, comprising:
a cable through which current is supplied to the first attachment; and
a first puller configured to pull the cable.

5. The workpiece transfer hand according to any one of claims 1 to 4, further comprising:
a movable attraction portion capable of attracting another workpiece; and
an attraction portion mover configured to move the movable attraction portion between a retracted position and an advanced position.

6. The workpiece transfer hand according to any one of claims 1 to 5, further comprising a fixed attraction portion that is permanently fixed to the plate and is capable of attracting the workpiece.

7. The workpiece transfer hand according to any one of claims 1 to 6,
wherein the plate includes an attachment mounting surface to which the plurality of attachments are attached, and
wherein an attachable region, defined as a region where any of the plurality of attachments is attachable in the attachment mounting surface, is continuously present 360 degrees around a central axis of the attachment mounting surface.

8. The workpiece transfer hand according to any one of claims 1 to 7, wherein the workpiece is a plate workpiece.

9. A workpiece transfer device comprising:
a workpiece transfer hand; and
a hand traveling device configured to move the workpiece transfer hand,
wherein the workpiece transfer hand includes
a plurality of attachments including a first attachment capable of attracting a workpiece, and a second attachment capable of attracting the workpiece, and
a plate to which the plurality of attachments are attached,
wherein the plurality of attachments are attachable to the plate in a first layout,
wherein each of the plurality of attachments is independently detachable from the plate, and
wherein the plurality of attachments are reattachable to the plate in a second layout different from the first layout.

10. The workpiece transfer device according to claim 9, further comprising an attachment supporter configured to support an attachment, out of the plurality of attachments, that has been detached from the plate,
wherein an attachment position of the first attachment with respect to the plate is changed by a movement of the workpiece transfer hand relative to the first attachment supported by the attachment supporter.

11. The workpiece transfer device according to claim 10, wherein the attachment supporter includes a plurality of supporters including a first supporter capable of supporting the first attachment and a second supporter capable of supporting the second attachment.

12. The workpiece transfer device according to claim 10 or 11, further comprising:
a controller configured to control the hand traveling device, the attachment supporter, and an attracting operation of each of the plurality of attachments; and
a first platform capable of supporting a plurality of workpieces including a first workpiece classified into a first group and a second workpiece classified into a second group,
wherein the controller is capable of executing a sorting mode of sorting the plurality of workpieces into a plurality of groups, and
wherein the sorting mode includes
conveying the first workpiece from the first platform to a first sorting region using the hand traveling device in a state where the first workpiece is attracted by the plurality of attachments attached to the plate in the first layout,
changing a layout of the plurality of attachments from the first layout to the second layout using the hand traveling device and the attachment supporter, and
conveying the second workpiece from the first platform to a second sorting region using the hand traveling device in a state where the second workpiece is attracted by the plurality of attachments attached to the plate in the second layout.

13. The workpiece transfer device according to claim 9, further comprising:
an attachment supporter configured to support an attachment, out of the plurality of attachments, that has been detached from the plate; and
a controller configured to control the hand traveling device and the attachment supporter,
wherein the controller is capable of executing a first position change mode of changing an attachment position of the first attachment with respect to the plate with the second attachment attached to the plate, and
wherein the controller is capable of executing a second position change mode of changing an attachment position of the second attachment with respect to the plate with the first attachment attached to the plate.

14. A laser beam machining system comprising:
a laser beam machining apparatus configured to irradiate a raw material workpiece with a laser beam to form a plurality of workpieces including a first workpiece and a second workpiece from the raw material workpiece; and
a workpiece transfer device configured to convey the plurality of workpieces,
wherein the workpiece transfer device includes
a workpiece transfer hand, and
a hand traveling device configured to move the workpiece transfer hand,
wherein the workpiece transfer hand includes
a plurality of attachments including a first attachment capable of attracting the first workpiece, and a second attachment capable of attracting the first workpiece, and
a plate to which the plurality of attachments are attached,
wherein the plurality of attachments are attachable to the plate in a first layout,
wherein each of the plurality of attachments is independently detachable from the plate, and
wherein the plurality of attachments are reattachable to the plate in a second layout different from the first layout.

15. The laser beam machining system according to claim 14, further comprising an attachment supporter configured to support an attachment, out of the plurality of attachments, that has been detached from the plate,
wherein an attachment position of the first attachment with respect to the plate is changed by a movement of the workpiece transfer hand relative to the first attachment supported by the attachment supporter.
